(19) Europäisches Patentamt
European Patent Office
Office européen des brevets

(11) **EP 3 671 645 A1**

(12) **EUROPÄISCHE PATENTANMELDUNG**

(43) Veröffentlichungstag:
**24.06.2020   Patentblatt 2020/26**

(51) Int Cl.:
*G06T 11/00* *(2006.01)*

(21) Anmeldenummer: **18214974.0**

(22) Anmeldetag: **20.12.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Carl Zeiss Vision International GmbH 73430 Aalen (DE)**

(72) Erfinder:
• **SCHWARZ, Oliver 73479 Ellwangen (DE)**
• **OMLOR, Lars Pleasanton, CA 94566 (US)**

(74) Vertreter: **Gauss, Nikolai et al Pfiz/Gauss Patentanwälte PartmbB Tübingerstraße 26 70178 Stuttgart (DE)**

(54) **VERFAHREN UND VORRICHTUNG ZUM ERZEUGEN EINER 3D-REKONSTRUKTION EINES OBJEKTS**

(57)    Die Erfindung betrifft das Erzeugen einer 3D-Rekonstruktion (62) eines Objekts. Sie umfasst das Beleuchten des Objekts, das Erfassen von Bilddaten zu dem Objekt und das Berechnen der 3D-Rekonstruktion (62) des Objekts aus den Bilddaten. Erfindungsgemäß umfassen die Bilddaten erste Bilddaten und zweite Bilddaten, wobei die ersten Bilddaten bei Beleuchten des Objekts (12) mit Beleuchtungslicht erfasst werden, das in Bezug auf einen Objektabbildungsstrahlengang wenigstens teilweise das Objekt beleuchtendes Auflicht ist, wobei die zweiten Bilddaten aus unterschiedlichen Aufnahmerichtungen erfasst werden, das wenigstens teilweise in dem Objektabbildungsstrahlengang geführt ist, und wobei die 3D-Rekonstruktion (62) des Objekts aus den ersten Bilddaten und den zweiten Bilddaten berechnet wird.

Fig.4

EP 3 671 645 A1

**Beschreibung**

Die Erfindung betrifft ein Verfahren zum Erzeugen einer 3D-Rekonstruktion eines Objekts, umfassend das Beleuchten des Objekts, das Erfassen von Bilddaten zu dem Objekt und das Berechnen der 3D-Rekonstruktion des Objekts aus den Bilddaten. Die Erfindung betrifft auch eine Vorrichtung zum Erzeugen einer 3D-Rekonstruktion eines Objekts mit einer Einrichtung für das Beleuchten des Objekts mit Beleuchtungslicht, mit einer Einrichtung für das Erfassen Bilddaten zu dem Objekt und mit einer Einrichtung für das Berechnen der 3D-Rekonstruktion des Objekts aus den erfassten Bilddaten. Die Erfindung betrifft außerdem ein Computerprogramm.

Aus der US 9,357,204 B2 sind ein Verfahren und eine Vorrichtung der eingangs genannten Art bekannt. Dort ist angegeben, eine 3D-Rekonstruktion einer Brille zu erstellen, indem diese auf einem rotierenden Drehteller angeordnet und damit vor mehreren Bilderfassungseinrichtungen in Form einer Kamera bewegt wird, um dabei Bilder mit unterschiedlichen Ansichten der Brille aufzunehmen, die eine Silhouette der Brille zeigen. Eine Rechnereinheit berechnet dann aus diesen Bildern eine 3D-Rekonstruktion zu der Brille.

In der deutschen Patentanmeldung Nr. 10 2018 209 570.1, die nachveröffentlicht ist und lediglich Stand der Technik nach Art. 54 (3) EPÜ bildet, ist angegeben, für ein Objekt eine 3D-Rekonstruktion zu ermitteln, indem das Objekt relativ zu einer Bilderfassungseinrichtung verlagert und dieses in unterschiedlichen Positionen des Objekts damit aufgenommen wird. Hier werden die erfassten Bilder nach einer Filterung anhand einer Kodier- und einer Dekodierfunktion auf ein dreidimensionales Gitter projiziert, dessen Werte die 3D-Rekonstruktion repräsentieren.

Marktübliche 3D-Scanner, die mittels Photogrammetrie für ein Objekt eine 3D-Rekonstruktion bereitstellen, eignen sich für das dreidimensionale Vermessen von Brillen und Brillenfassungen nicht, da diese sehr dünne und teilweise reflektierende Strukturen aufweisen. Um Brillen und Brillengläser mittels Streifenprojektion vermessen zu können, müssen diese in der Regel mit einer Oberflächenbeschichtung versehen werden, die z.B. mittels eines Sprays aufgebracht wird. Das genaue Vermessen von Objekten mittels Laserlinienscanning erfordert das Bereitstellen von energiereicher Laserstrahlung und hochauflösenden Kameras, die das Erfassen von Bildern mit großen Helligkeitsunterschieden ermöglichen.

Aufgabe der Erfindung ist es, die 3D-Rekonstruktion eines Objekts, das auch einen für das Licht transparenten, einen das Licht reflektierenden oder auch einen glänzenden Abschnitt haben kann, mit einer verbesserten Genauigkeit zu ermöglichen.

Diese Aufgabe wird durch das in Anspruch 1 angegebene Verfahren und die in Anspruch 15 angegebene Vorrichtung gelöst. Vorteilhafte Ausführungsformen der Erfindung sind in den abhängigen Ansprüchen angegeben.

Das erfindungsgemäße Verfahren zum Erzeugen einer 3D-Rekonstruktion eines Objekts umfasst das Beleuchten des Objekts, das Erfassen von Bilddaten zu dem Objekt und das Berechnen der 3D-Rekonstruktion des Objekts aus den Bilddaten. Die Bilddaten umfassen dabei erste Bilddaten und zweite Bilddaten, wobei die ersten Bilddaten aus unterschiedlichen Aufnahmerichtungen bei Beleuchten des Objekts mit Beleuchtungslicht erfasst werden, das in Bezug auf einen Objektabbildungsstrahlengang wenigstens teilweise das Objekt beleuchtendes Auflicht ist, wobei die zweiten Bilddaten aus unterschiedlichen Aufnahmerichtungen bei Beleuchten des Objekts mit Beleuchtungslicht erfasst werden, das wenigstens teilweise in einem Objektabbildungsstrahlengang geführt ist, und die 3D-Rekonstruktion des Objekts aus den ersten Bilddaten und den zweiten Bilddaten berechnet wird.

Das erfindungsgemäße Verfahren zum Erzeugen einer 3D-Rekonstruktion eines Objekts kann insbesondere das Beleuchten des Objekts und das Erfassen einer Vielzahl von Bildern des Objekts mit Bilddaten in einem jeweiligen Objektabbildungsstrahlengang sowie das Berechnen der 3D-Rekonstruktion des Objekts aus den Bilddaten der erfassten Bilder umfassen. Die Vielzahl der erfassten Bilder des Objekts enthält dabei erste Bilder und zweite Bilder mit Bilddaten. Die ersten Bilder werden aus unterschiedlichen Aufnahmerichtungen bei Beleuchten des Objekts mit Beleuchtungslicht erfasst, das in Bezug auf den jeweiligen Objektabbildungsstrahlengang wenigstens teilweise das Objekt beleuchtendes Auflicht ist. Die zweiten Bilder werden aus unterschiedlichen Aufnahmerichtungen bei Beleuchten des Objekts mit Beleuchtungslicht erfasst, das wenigstens teilweise in dem jeweiligen Objektabbildungsstrahlengang geführt ist. Die 3D-Rekonstruktion des Objekts wird dann aus den Bilddaten der ersten und zweiten Bilder berechnet.

Das erfindungsgemäße Verfahren zum Erzeugen einer 3D-Rekonstruktion eines Objekts kann auch das Beleuchten des Objekts und das Erfassen einer Vielzahl von Bildern des Objekts mit Bilddaten mittels wenigstens einer Bilderfassungseinrichtung in einem Objektabbildungsstrahlengang bei unterschiedlichen Anordnungen des Objekts relativ zu der wenigstens einen Bilderfassungseinrichtung sowie das Berechnen der 3D-Rekonstruktion des Objekts aus den Bilddaten der erfassten Bilder umfassen, wobei die Vielzahl der erfassten Bilder des Objekts erste Bilder und zweite Bilder mit Bilddaten enthält, wobei die ersten Bilder zu unterschiedlichen Anordnungen des Objekts relativ zu der wenigstens einen Bilderfassungseinrichtung bei Beleuchten des Objekts mit Beleuchtungslicht erfasst werden, das in Bezug auf den Objektabbildungsstrahlengang wenigstens teilweise das Objekt beleuchtendes Auflicht ist, und wobei die zweiten Bilder zu unterschiedlichen Anordnungen des Objekts relativ zu der wenigstens einen Bilderfassungseinrichtung bei Beleuchten des Objekts mit Beleuchtungslicht erfasst werden, das wenigstens teilweise in dem Objektabbildungsstrahlengang zu der wenigstens einen Bilderfassungseinrichtung geführt ist. Die 3D-Rekonstruktion des Objekts wird dann aus den Bilddaten der ersten und zweiten Bilder berechnet.

Eine erfindungsgemäße Vorrichtung zum Erzeugen einer 3D-Rekonstruktion eines Objekts enthält eine Einrichtung für das Beleuchten des Objekts mit Beleuchtungslicht, eine Einrichtung für das Erfassen von Bilddaten zu dem Objekt und eine Einrichtung für das Berechnen der 3D-Rekonstruktion des Objekts aus den erfassten Bilddaten. Die erfassten Bilddaten enthalten erste Bilddaten und zweite Bilddaten, wobei die ersten Bilddaten aus unterschiedlichen Aufnahmerichtungen bei Beleuchten des Objekts mit Beleuchtungslicht erfasst sind, das in Bezug auf einen Objektabbildungsstrahlengang wenigstens teilweise das Objekt beleuchtendes Auflicht ist, wobei die zweiten Bilddaten aus unterschiedlichen Aufnahmerichtungen bei Beleuchten des Objekts mit Beleuchtungslicht erfasst sind, das wenigstens teilweise in einem Objektabbildungsstrahlengang geführt ist, und wobei die 3D-Rekonstruktion des Objekts aus den ersten Bilddaten und den zweiten Bilddaten berechnet ist.

Eine erfindungsgemäße Vorrichtung zum Erzeugen einer 3D-Rekonstruktion eines Objekts kann insbesondere eine Einrichtung für das Beleuchten des Objekts mit Beleuchtungslicht und eine Einrichtung für das Erfassen einer Vielzahl von Bildern des Objekts mit Bilddaten in einem jeweiligen Objektabbildungsstrahlengang sowie eine Einrichtung für das Berechnen der 3D-Rekonstruktion des Objekts aus den erfassten Bildern enthalten, wobei die Vielzahl der erfassten Bilder des Objekts erste Bilder und zweite Bilder mit Bilddaten enthält, wobei die ersten Bilder aus unterschiedlichen Aufnahmerichtungen bei Beleuchten des Objekts mit Beleuchtungslicht erfasst sind, das in Bezug auf den jeweiligen Objektabbildungsstrahlengang wenigstens teilweise das Objekt beleuchtendes Auflicht ist, wobei die zweiten Bilder aus unterschiedlichen Aufnahmerichtungen bei Beleuchten des Objekts mit Beleuchtungslicht erfasst sind, das wenigstens teilweise in dem jeweiligen Objektabbildungsstrahlengang geführt ist, und wobei die 3D-Rekonstruktion des Objekts aus den Bilddaten der ersten und zweiten Bilder berechnet ist.

Eine erfindungsgemäße Vorrichtung zum Erzeugen einer 3D-Rekonstruktion eines Objekts kann alternativ hierzu auch eine Einrichtung für das Beleuchten des Objekts mit Beleuchtungslicht enthalten und eine Einrichtung für das Erfassen einer Vielzahl von Bildern des Objekts mit Bilddaten in wenigstens einer Bilderfassungseinrichtung in einem Objektabbildungsstrahlengang bei unterschiedlichen Anordnungen des Objekts relativ zu der wenigstens einen Bilderfassungseinrichtung aufweisen, wobei eine Einrichtung für das Berechnen der 3D-Rekonstruktion des Objekts aus den erfassten Bildern vorgesehen ist und wobei es eine Einrichtung für das Beleuchten des Objekts mit Beleuchtungslicht gibt, das in Bezug auf den Objektabbildungsstrahlengang wenigstens teilweise das Objekt beleuchtendes Auflicht ist, und das auch das Beleuchten des Objekts mit Beleuchtungslicht ermöglicht, das wenigstens teilweise in dem Objektabbildungsstrahlengang zu der wenigstens einen Bilderfassungseinrichtung geführt ist. Hier wird die 3D-Rekonstruktion des Objekts aus den Bilddaten erster und zweiter Bilder in einer mittels der Einrichtung für das Erfassen einer Vielzahl von Bildern des Objekts mit Bilddaten erfassten Vielzahl von Bildern berechnet, wobei die ersten Bilder zu unterschiedlichen Anordnungen des Objekts relativ zu der wenigstens einen Bilderfassungseinrichtung bei Beleuchten des Objekts mit Beleuchtungslicht erfasst sind, das in Bezug auf den Objektabbildungsstrahlengang wenigstens teilweise das Objekt beleuchtendes Auflicht ist, und wobei die zweiten Bilder zu unterschiedlichen Anordnungen des Objekts relativ zu der wenigstens einen Bilderfassungseinrichtung bei Beleuchten des Objekts mit Beleuchtungslicht erfasst sind, das wenigstens teilweise in dem Objektabbildungsstrahlengang zu der wenigstens einen Bilderfassungseinrichtung geführt ist.

Das Objekt, zu dem die 3D-Rekonstruktion erzeugt wird, kann insbesondere eine Brillenfassung sein.

Ein Objektabbildungsstrahlengang einer Bilderfassungseinrichtung zu einem Objekt ist vorliegend ein optischer Strahlengang, der das Objekt ganz oder teilweise in einer Bildebene einer Bilderfassungseinrichtung abbildet.

Unter ein Objekt in Bezug auf den Objektabbildungsstrahlengang beleuchtendem Auflicht ist vorliegend Licht zu verstehen, welches das Objekt beleuchtet und dabei an einer das Licht streuenden oder reflektierenden Oberfläche des Objekts in einen das Objekt abbildenden Objektabbildungsstrahlengang gestreut oder reflektiert wird.

Indem Bilder mit Bilddaten zu unterschiedlichen Anordnungen des Objekts relativ zu einer Bilderfassungseinrichtung nicht nur bei Beleuchten des Objekts mit Beleuchtungslicht erfasst werden, das in Bezug auf den Objektabbildungsstrahlengang wenigstens teilweise das Objekt beleuchtendes Auflicht ist, sondern auch bei Beleuchten des Objekts mit Beleuchtungslicht, das wenigstens teilweise in dem Objektabbildungsstrahlengang zu der wenigstens einen Bilderfassungseinrichtung geführt ist, lassen sich transparente Strukturen von Objekten erkennen und in einer 3D-Rekonstruktion des Objekts berücksichtigen.

Von Vorteil ist es, wenn für das Berechnen der 3D-Rekonstruktion des Objekts eine tomografische Rekonstruktion des Objekts ermittelt wird. Auf diese Weise ist es insbesondere möglich, für dünne Objekte eine genaue 3D-Rekonstruktion anzugeben.

Unter der tomografischen 3D-Rekonstruktion eines Objekts ist vorliegend ein in der deutschen Patentanmeldung DE 10 2018 209 570.1 beschriebenes Verfahren zur Erzeugung eines dreidimensionalen Abbilds eines Objekts zu verstehen, auf die hiermit Bezug genommen und deren Offenbarung in die vorliegende Erfindungsbeschreibung vollumfänglich einbezogen wird. Dieses Verfahren stellt das dreidimensionale Abbild des Objekts, d. h. die tomografische 3D-Rekonstruktion des Objekts als ein 3D-Voxel-Gitter dar, die aus zu dem Objekt vorliegenden, z. B. erfassten Intensitätsbildern berechnet werden.

Intensitätsbilder können grundsätzlich auch farbige Bilder sein. Die oben erwähnte Berechnung kann deshalb auf jedem Farbkanal einzeln sowohl für die ersten Bilder, die zu unterschiedlichen Anordnungen des Objekts relativ zu der wenigstens einen Bilderfassungseinrichtung bei Beleuchten des Objekts mit Beleuchtungslicht erfasst werden, als auch für die zweiten Bilder durchgeführt werden, die zu unterschiedlichen Anordnungen des Objekts relativ zu der wenigstens einen Bilderfassungseinrichtung bei Beleuchten des Objekts mit Beleuchtungslicht erfasst sind, das wenigstens teilweise in dem Objektabbildungsstrahlengang zu der wenigstens einen Bilderfassungseinrichtung geführt ist.

Das Verfahren der tomografischen 3D-Rekonstruktion enthält folgende Schritte:

- Die Intensitätsbilder zu dem Objekt werden vorverarbeitet, z. B. wie in der Publikation "R. Cierniak, X-ray computed tomography in biomedical engineering, Springer Science & Business Media (2011)" beschrieben, auf die hiermit Bezug genommen und deren Offenbarung in diese Erfindungsbeschreibung vollumfänglich mit einbezogen wird, mittels eines Hochpassfilters, eines Ram-Lak Filters, eines Shepp-Logan-Filters, eines Generalized-Hamming Filters, eines Low-Pass-Cosine-Filters, durch Berechnen von Objektmerkmalsbildern oder durch Hervorhebung der Kanten im Bild mittels eines zusätzlichen Filterschritts, damit bei der 3D-Rekonstruktion des Objekts nur dessen Außenkanten sichtbar sind.

- Es wird aus den vorbearbeiteten Bildern ein 3D-Voxel-Gitter konstruiert, dessen Auflösung von der geforderten Rekonstruktionsgenauigkeit abhängt.

Unter einem Voxel ist vorliegend ein Gitterpunkt in einem dreidimensionalen Gitter zu verstehen. Ein 3D-Voxel-Gitter repräsentiert ein 3D-Objekt in einer Rechnereinheit. Liegt z. B. ein Voxel innerhalb eines Objekts oder auf einer Oberfläche eines Objekts, wird ihm ein Wert größer als 0 und kleiner gleich 1 zugeordnet. Liegt ein Voxel außerhalb eines Objekts, wird ihm der Wert 0 zugeordnet. Bei halbtransparenten Objekten gibt der Wert des Voxels den Grad der Transparenz des Objekts an dieser Stelle an. Bei opaken Objekten werden Werte von 0 außerhalb des Objekts und 1 innerhalb des Objekts angenommen.

- Für ein jedes Voxel wird eine Intensität in dem Gitter mittels einer Kodier- und Dekodierfunktion berechnet. Dabei werden die folgenden Schritte angewandt:

    a. Projektion des Voxelzentrums in jedes vorverarbeitete erfasste Bild mittels der Abbildungsparameter der zugehörigen Bilderfassungseinrichtungen;
    b. Auslesen der Intensität des Pixels;
    c. Gewichtung der Intensität mit einem Gewichtungsfaktor, der antiproportional zum Abstand des Voxels zur zugehörigen Bilderfassungseinrichtung ist (Kodierfunktion); und
    d. Berechnung der Summe der gewichteten Intensitäten über alle erfassten Bilder (Dekodierfunktion).

Es ergibt sich auf diese Weise ein 3D-Voxel-Gitter mit einer dreidimensionalen Intensitätsverteilung, deren Maxima den 3D-Objektpunkten entsprechen.

Von Vorteil ist es, wenn das 3D-Voxel-Gitter mittels eines Filters und/oder eines neuronalen Netzes artefaktkorrigiert wird. Auf diese Weise kann die Genauigkeit der 3D-Rekonstruktion des Objekts erhöht werden, wobei die 3D-Rekonstruktion des Objekts das Objekt auch bei unterschiedlichen komplizierten Objektgeometrien präzise wiedergibt. Von Vorteil ist es auch, wenn das Berechnen der 3D-Rekonstruktion des Objekts das Berechnen von Objektmerkmalsbildern zu wenigstens einem Teil der ersten Bilder umfasst. Auf diese Weise lässt sich die 3D-Rekonstruktion auf die gefilterten Merkmale beschränken und dadurch bei der Berechnung der 3D-Rekonstruktion des Objekts eine Verringerung der Rechenzeit und der zu verarbeitenden Daten erreichen.

Ein Objektmerkmalsbild kann z. B. an einem jeden Pixel die Information enthalten, ob ein bestimmtes Merkmal des Objekts an diesem Pixel vorliegt. Detektierte Merkmale können insbesondere Kanten, Ecken, sogenannte Blobs oder auch bedeutsame Pixel, d.h. "interest points" sein. Objektmerkmalsbilder können insbesondere Binärbilder mit Bildpixeln sein, die entweder den Wert W=0 oder den Wert W=1 annehmen. Der Wert W=1 bedeutet, dass das gesuchte Merkmal, z. B. eine Kante, an diesem Pixel vorliegt. Der Wert W=0 besagt, dass dies nicht der Fall ist. Alternativ können Objektmerkmalsbilder auch Werte im Intervall [0,1] enthalten, die eine Wahrscheinlichkeit für das Vorliegen des gesuchten Merkmals repräsentieren. Auch andere Werte, z. B. Vektoren mit Filterantworten bei Faltung der erfassten Bilder mit einem oder mehreren Filterkernen zur Detektion von spezifischen Merkmalen sind möglich, z. B. Garborfilter zur Texturanalyse, SIFT-Features zur Detektion von bedeutsamen Bildpunkten, wie sie in der Publikation "D.G. Lowe, Object recognition from local scale invariant features; Proceedings of the International Conference on Computer Vision, ICCV '99, 1150-1157 (1999)" beschrieben sind, auf die hiermit Bezug genommen und deren Offenbarung in die vorliegende Erfindungsbeschreibung vollumfänglich einbezogen wird.

Eingesetzt werden kann auch ein SURF-Feature-Detektor, wie er in der Publikation "H. Bay, A. Ess, T. Tuytelaars, and L. Van Gool, Speeded-Up Robust Features (surf), Comput. Vis. Image Underst., 110 (3), 346-359 (2008)" beschrieben ist, auf die hiermit Bezug genommen und deren Offenbarung in die vorliegende Erfindungsbeschreibung vollumfänglich einbezogen wird, oder ein AKAZE-Feature-Detektor , wie er in der Publikation "A. B. Pablo Alcantarilla, J. Nuevo: Fast explicit diffusion for accelerated features in nonlinear scale spaces; In Proceedings of the British Machine Vision Conference. BMVA Press, 2013." beschrieben ist, auf die hiermit Bezug genommen und deren Offenbarung in die vorliegende Erfindungsbeschreibung vollumfänglich einbezogen wird, oder ein MSER-Feature-Detektor, wie er aus der Publikation "Matas, O. Chum, M. Urban, T. Pajdla, Robust Wide Baseline Stereo from Maximally Stable Extremal Regions, Proc. BMVC, 36.1-36.10 (2002)" bekannt ist. Auch auf diese Publikation wird hiermit Bezug genommen und ihre Offenbarung wird in die vorliegende Erfindungsbeschreibung vollumfänglich einbezogen. Darüber hinaus ist es möglich, mehrere vorstehend beschriebene Detektoren zu kombinieren. Insbesondere ist es möglich, mittels Machine Learning gelernte Filter für anwendungsspezifische Aufgaben wie z. B. die Detektion von Fassungskanten einer Brillenfassung einzusetzen.

Da die Merkmale eines Objekts sich oft nicht auf einen Pixel genau lokalisieren lassen, kann jedes detektierte Merkmal lokal mit einer Gaußfunktion gewichtet werden. Zu bemerken ist, dass die Objektmerkmalsbilder als Merkmal z. B. ein einziges Objektmerkmal oder auch mehrere Objektmerkmale aus der Gruppe Kante, Eckpunkte, Gaborfeature aufweisen können.

Indem die Objektmerkmalsbilder mittels maschinellen Lernens oder mittels eines neuronalen Netzes berechnet werden, lässt sich erreichen, dass in einer Einrichtung für das Berechnen der 3D-Rekonstruktion des Objekts aus den erfassten Bildern zu dem Objekt nicht vorab Merkmale festgelegt werden müssen. Ein Algorithmus in der Einrichtung kann dann selbst lernen, welche Merkmale das Objekt hat und wie diese zu detektieren sind. Hierdurch kann die Genauigkeit einer zu einem Objekt berechneten 3D-Rekonstruktion ebenfalls gesteigert werden.

Für das Berechnen der 3D-Rekonstruktion des Objekts kann insbesondere vorgesehen sein, segmentierte Bildmasken zu bestimmen und das Ausschneiden eines Objektteils aus wenigstens einem Teil der ersten und/oder zweiten Bilder mittels der segmentierten Bildmasken vorzusehen.

Unter einer segmentierten Bildmaske ist vorliegend ein Bild zu verstehen, das ein Abbild des Objekts in Form eines Binärbilds ist, in dem genau die Pixel den Wert 1 aufweisen, die zum Abbild des zu rekonstruierenden Objekts gehören, und in dem die Pixel des Hintergrunds den Wert 0 aufweisen.

Segmentierte Bildmasken können insbesondere mittels maschinellen Lernens bestimmt werden, indem die zu segmentierenden Bilder zunächst von Hand durch Setzen von Konturpunkten segmentiert werden und anschließend ein neuronales Netz für die Erkennung der Bildmasken trainiert wird. Alternativ oder zusätzlich können simulierte Bilddaten für bekannte 3D-Objekte und deren segmentierte Bildmasken generiert werden und diese als Trainingsdaten für das neuronale Netz dienen. Dabei ist es von Vorteil, sowohl erste als auch zweite erfasste Bilder als Eingabe für das neuronale Netz zu verwenden, da die Berechnung der segmentierten Bildmasken auf Basis beider Bilddaten genauer ist.

Das Berechnen der 3D-Rekonstruktion des Objekts kann auch das Berechnen von Kanteninformationsbildern aus den ersten und/oder zweiten Bildern umfassen.

Unter Kanteninformationsbildern sind vorliegende Objektmerkmalsbilder für das spezielle Merkmal "Kante" zu verstehen. Zur Detektion von Kanten können grundsätzlich verschiedene Filter verwendet werden, z. B. wie in der Publikation "W. Rong, Z. Li, W. Zhang and L. Sun, An Improved Canny Edge Detection Algorithm, IEEE International Conference on Mechatronics and Automation, Tianjin, 577-582 (2014)" beschrieben, auf die hiermit Bezug genommen und deren Offenbarung in die vorliegende Erfindungsbeschreibung vollumfänglich einbezogen wird, oder wie in der US 2015/362761 A beschreiben, auf die hiermit ebenfalls Bezug genommen und deren Offenbarung in die vorliegende Erfindungsbeschreibung vollumfänglich einbezogen wird, oder auch wie in der Publikation "R.C. Bolles, H.H. Baker, D.H. Marimont, Epipolar-Plane Image Analysis: An Approach to Determining Structure from Motion, International Journal of Computer Vision, 1, 7-55 (1987)" beschrieben, worauf hiermit genauso Bezug genommen und deren Offenbarung in die Erfindungsbeschreibung vollumfänglich einbezogen wird, Canny-Edge-Detektoren oder, wie in der Publikation "R.O. Duda, P.E. Hart, Use of the Hough Transformation to Detect Lines and Curves in Pictures, Comm. ACM, 15, 11-15 (1972)" angegeben, auf die hiermit ebenfalls Bezug genommen und deren Offenbarung in die vorliegende Erfindungsbeschreibung vollumfänglich einbezogen wird, Houghtransformationen oder auch, wie in der Publikation S. Wanner, B. Goldlucke, Globally Consistent Depth Labeling of 4D Light Fields, Computer Vision and Pattern Recognition (CVPR), 2012 IEEE Conference on, IEEE (2012)" beschrieben, auf die hiermit genauso Bezug genommen und deren Offenbarung in die vorliegende Erfindungsbeschreibung vollumfänglich einbezogen wird, Struktur-Tensoren. Zu bemerken ist, dass auch mittels sogenanntem Machine Learning gelernte Kantendetektionsfilter zur Detektion von speziellen trainierten Kanten eingesetzt werden können.

Insbesondere kann das Berechnen der 3D-Rekonstruktion des Objekts anhand des Berechnens von Epipolarebenenbildern aus den Objektmerkmalsbildern und/oder den Kanteninformationsbildern erfolgen.

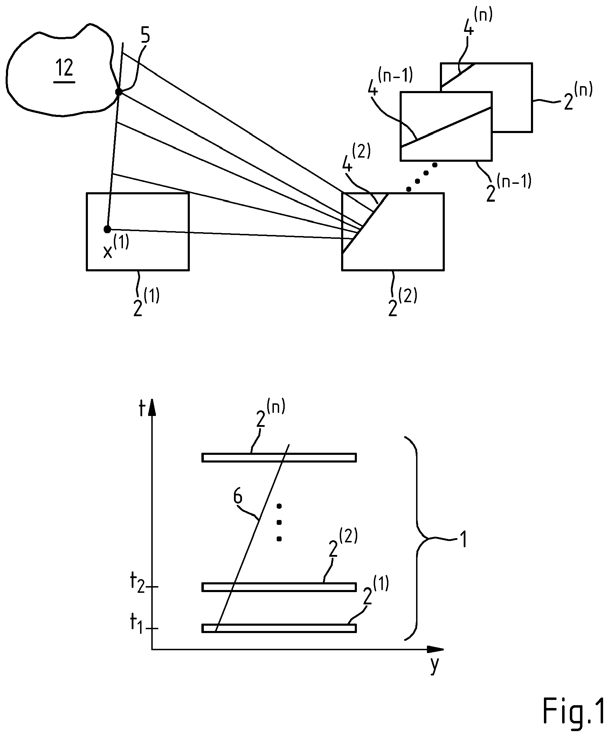

Die Fig. 1 ist eine Darstellung der Berechnung eines Epipolarebenenbildes aus erfassten Bildern unter Ausnutzung epipolargeometrischer Zusammenhänge.

Die sogenannte Epipolargeometrie findet Anwendung bei der Berechnung von Tiefenkarten und der 3D-Rekonstruktion von Objekten. Unter Bezugnahme auf die Fig. 1 wird ein 3D-Punkt 5 des Objekts 12 bei jeder Anordnung des Objekts relativ zur Bilderfassungseinrichtung auf einen bestimmten Bildpunkt $x^{(1)}$ der Bildebene der Bilderfassungseinrichtung abgebildet. Wird umgekehrt ein ausgewählter Bildpunkt $x^{(1)}$ in einem aufgenommenen Bild betrachtet, so entspricht diesem Bildpunkt eine ganze Linie in dem 3D-Raum aller 3D-Punkte mit einer unterschiedlichen Tiefe, die auf diesen einen Bildpunkt abgebildet werden. Diese Linie kann aus dem ausgewählten Bildpunkt und den bekannten Abbildungsparametern der Bilderfassungseinrichtung berechnet werden. In einem zweiten aufgenommen Bild zu einer anderen Anordnung des Objekts relativ zur Bilderfassungseinrichtung wird diese 3D-Linie auf eine 2D-Linie $4^{(2)}$ projiziert. Dies ist die sogenannte Epipolarlinie. Auf dieser muss auch das Abbild des ausgewählten 3D-Objektpunktes liegen. Dadurch wird der Suchbereich stark eingeschränkt und somit das Problem der Detektion von korrespondieren Punkten in unterschiedlichen erfassten Bildern durch die Berechnung der Epipolarlinie $4^{(2)}$ vereinfacht. Durch die Detektion von korrespondierenden Punkten in zwei mittels der Bilderfassungseinrichtung zu unterschiedlichen Anordnungen des Objekts erfassten Bildern ist es möglich, mit Hilfe der Abbildungsparameter der Bilderfassungseinrichtung durch Triangulation auf die Tiefe des zugehörigen 3D-Punktes 5 zu schließen. Um die Berechnung der Epipolarlinien $4^{(2)}, ... , 4^{(n)}$ zu vereinfachen, können Verfahren wie z.B. eine Rektifizierung der Bildpaare relativ zu einem bestimmten Bild in den erfassten Bildern oder eine Bilddrehung angewendet werden, wie dies z.B. beschrieben ist in der Publikation "R. Hartley and A. Zisserman, Multiple View Geometry in Computer Vision, Cambridge University Press, New York, NY, USA, 2nd ed. (2003)", auf die hiermit Bezug genommen und deren Offenbarung in die vorliegende Erfindungsbeschreibung vollumfänglich einbezogen wird.

Unter Epipolarebenenbildern $E_{x,k}(y,t)$ werden unter Bezugnahme auf die Fig. 1 aus Bildpunkten y aufgebaute Bilder 1 verstanden, die auf Basis der Epipolargeometrie aus mehreren, mittels einer Bilderfassungseinrichtung k zu einem Objekt 12 zu verschiedenen Zeiten t erfassten Bildern $2^{(1)}, 2^{(2)}, ... 2^{(n-1)}, 2^{(n)}$ bei unterschiedlichen, bekannten Anordnungen desselben relativ zu der Bilderfassungseinrichtung k und unter Berücksichtigung bekannter Abbildungseigenschaften der Bilderfassungseinrichtung k berechnet sind.

Dabei wird zu einem jeden ausgewählten Bildpunkt $x^{(1)}$ ... in einem ersten erfassten Bild $2^{(1)}$ die sogenannte Epipolarlinie $4^{(2)}, ... 4^{(n)}$ in jedem weiteren erfassten Bild $2^{(2)}, ... 2^{(n)}$ angegeben. In einem Epipolarebenenbild $E_{x,k}(y,t)$ gibt es also für verschiedene Anordnungen des Objekts vor der Bilderfassungseinrichtung für den ausgewählten Bildpunkt $x^{(1)}$ in dem erfassten ersten Bild $2^{(1)}$ die zugehörigen Epipolarlinien $4^{(2)} ... 4^{(n)}$ in entsprechend weiteren erfassten Bildern $2^{(2)}, ... 2^{(n-1)}, 2^{(n)}$. Ein Epipolarebenenbild $E_{x,k}(y,t)$ enthält damit in jeder Bildzeile mit Bildpunkten y die Intensitäten einer Epipolarlinie $4^{(2)}, ... 4^{(n)}$ zu dem ausgewählten Bildpunkt x in dem jeweiligen zum Zeitpunkt t erfassten Bild der Bilderfassungseinrichtung k.

Werden das Objekt 12 und die Bilderfassungseinrichtung k beim Erfassen der Bilder $2^{(1)}, 2^{(2)}, ... 2^{(n-1)}, 2^{(n)}$ relativ zueinander auf einer Trajektorie bewegt, die eine Gerade ist, so enthält das Epipolarebenenbild $E_{x,k}(y,t)$ entsprechend eine Objektpunkttrajektorie in Form einer Geraden 6, welche die Bewegung des zum ausgewählten Bildpunkt gehörenden 3D-Punkts 5 des Objekts 12 beschreibt. Zu bemerken ist, dass es genügt, die mittels der Bilderfassungseinrichtung erfassten Bilder zu entzeichnen, damit in dem Epipolarebenenbild eine Gerade erhalten werden kann.

Aus der Steigung dieser Geraden 6, die dem tiefenabhängigen Versatz entspricht, der sogenannten "disparity" bei Stereo-Tiefenschätzungs-Verfahren, wird dann die räumliche Tiefe des 3D-Punktes 5 relativ zu der Bilderfassungseinrichtung bestimmt.

Die Detektion der Objektpunkttrajektorie in Form der Geraden 6 und das Bestimmen von deren Steigung kann grundsätzlich in verschiedenen Bildverarbeitungsverfahren durchgeführt werden. Möglich ist die Detektion der Objektpunkttrajektorie und das Bestimmen von deren Steigung z. B. anhand einer Hough-Transformation, in einer Struktur-Tensor-Berechnung, wie in "K. Polisano et al. Convex super-resolution detection of lines in images, Signal Processing Conference (EUSIPCO), 2016 24th European. IEEE, (2016)" beschrieben, auf die hiermit Bezug genommen und deren Offenbarung in die vorliegende Erfindungsbeschreibung vollumfänglich einbezogen wird, mittels konvexer Superauflösung oder, wie in der Publikation "M.W. Tao, S. Hadap, J. Malik, and R. Ramamoorthi, Depth from Combining Defocus and Correspondence Using Light-Field Cameras, Proceedings of the 2013 IEEE International Conference on Computer Vision (ICCV '13). IEEE Computer Society, Washington, DC, USA, 673-680 (2013)" angegeben, auf die hiermit ebenfalls Bezug genommen und deren Offenbarung in die vorliegende Erfindungsbeschreibung vollumfänglich einbezogen wird, mittels symmetriebasierter Berechnungsverfahren wie z.B. Depth-From-Defocus-Berechnung.

Erfindungsgemäß kann eine epipolargeometrische 3D-Rekonstruktion eines Objekts wie folgt durchgeführt werden:

In einem ersten Schritt werden die Bilderfassungseinrichtungen in der Vorrichtung zum Erzeugen einer 3D-Rekonstruktion eines Objekts kalibriert, indem deren intrinsische und extrinsische Abbildungsparameter bestimmt und die Raumposition jeder Bilderfassungseinrichtung relativ zu den jeweils anderen Bilderfassungseinrichtungen ermittelt wird. In einem weiteren Schritt wird dann die Einrichtung zur Bewegung des Objekts relativ zu den Bilderfassungseinrichtungen kalibriert. Als Ergebnis dieses Kalibriervorgangs erhält man für jede Anordnung des Objekts relativ zu den Bilderfassungseinrichtungen eine Rotationsmatrix und einen Translationsvektor.

Die extrinsischen Abbildungsparameter einer Bilderfassungseinrichtung beschreiben Eigenschaften wie die relative Ausrichtung der optischen Achse der Bilderfassungseinrichtung zu einer anderen Bilderfassungseinrichtung oder einem vorgegebenen Koordinatensystem. Die intrinsischen Abbildungsparameter definieren, wie die Koordinaten eines Punktes im Raum in einem zu der entsprechenden Bilderfassungseinrichtung referenzierten Koordinatensystem, der in die Bildebene des Bildsensors der Bilderfassungseinrichtung abgebildet wird, in die Koordinaten des in der Bildebene des Bildsensors liegenden Bildpunkts dieses Punkts überführt werden.

Eine ausführliche Erklärung der Kalibrierung von Bilderfassungseinrichtungen in Form von Kameras findet sich z. B. auf S. 8 in dem Lehrbuch " R. Hartley, A. Zisserman, Multiple View Geometry in Computer Vision, 2. Auflage, Cambridge University Press (2004)", auf das hiermit Bezug genommen und dessen Offenbarung in die vorliegende Erfindungsbeschreibung vollumfänglich mit einbezogen wird.

Für die epipolargeometrische 3D-Rekonstruktion des Objekts erfolgt dann eine Detektion von Kanten und Merkmalen in den Bilddaten der erfassten Bilder.

Darauf werden Epipolarebenenbilder für jedes detektierte Merkmal berechnet.

Dann erfolgt eine Detektion von Objektpunkttrajektorien in den Epipolarebenenbildern und es wird die Steigung der Objektpunkttrajektorien berechnet.

Darauf wird eine Bestimmung der zugehörigen Tiefe unter Ausnutzung der Abbildungsparameter der Bilderfassungseinrichtung vorgenommen.

Zu jedem Merkmalspunkt ergibt sich dadurch dann ein 3D-Punkt einer Punktewolke, die die 3D-Rekonstruktion des Objekts repräsentiert.

Zu bemerken ist, dass durch die Verwendung mehrerer Bilderfassungseinrichtungen gleichzeitig sowie von Verfahren zur Fehlerminimierung, etwa der Mittelung oder robuste Schätzer wie dem sogenannten "Random Sample Consensus" (RANSAC) - Verfahren, das z.B. unter

*https://en.wikipedia.org/wiki/Random_sample_consensus*

(Stand 16.11.2017) beschrieben ist, worauf hiermit Bezug genommen und dessen Offenbarung in die vorliegende Erfindungsbeschreibung vollumfänglich mit einbezogen wird, eine robustere 3D-Rekonstruktion berechnet werden kann.

Von Vorteil ist es, wenn das Berechnen der 3D-Rekonstruktion des Objekts das Berechnen von Objektpunkttrajektorien aus den Epipolarebenenbildern und das Vermessen der Steigung der berechneten Objektpunkttrajektorien und das Schätzen von Tiefeninformationen mittels Triangulation zu einer epipolargeometrischen 3D-Rekonstruktion des Objekts erfolgt. Auf diese Weise lässt sich erreichen, dass keine Tiefenberechnung durch Vergleich von Bildausschnitten erfolgen muss und es wird hierdurch eine Rekonstruktion von sehr dünnen Strukturen ermöglicht.

Das Berechnen von Objektpunkttrajektorien bewirkt auch eine Robustheit der 3D-Rekonstruktion des Objekts, wenn das Objekt für das Licht transparente Strukturen hat, da sich hier Veränderungen der Farbe eines einzelnen Objektpunktes graduell oder in wenigen Bildern nicht oder nur wenig auswirken. Objektpunkttrajektorien werden nämlich als Linien über alle Bilder berechnet.

Insbesondere kann vorgesehen sein, dass für das Berechnen der 3D-Rekonstruktion des Objekts eine tomografische Rekonstruktion des Objekts ermittelt wird, indem die Bilddaten der ersten und zweiten Bilder nach einem ortsabhängigen Gewichten und möglicherweise Filtern in ein 3D-Voxel-Gitter rückprojiziert werden, wobei die epipolargeometrische 3D-Rekonstruktion des Objekts mit dem 3D--Voxel-Gitter zu der 3D-Rekonstruktion des Objekts verrechnet wird.

Auf diese Weise lässt sich erreichen, dass die 3D-Rekosntruktion des Objekts auch für unterschiedliche Objektgeometrien zuverlässig und genau ist, weil sich dann Fehler der epipolargeometrischen 3D-Rekonstruktion des Objekts und der tomografischen 3D-Rekonstruktion des Objekts wegmitteln.

Indem das 3D-Voxel-Gitter mittels eines Filters und/oder eines neuronalen Netzes artefaktkorrigiert wird, kann die Genauigkeit der 3D-Rekonstruktion des Objekts weiter gesteigert werden.

Bevorzugt wird aus dem 3D-Voxel-Gitter ein Mesh für die Beschreibung der Oberfläche des Objekts berechnet. Damit lässt sich im Vergleich zu einer Punktewolke eine schnellere Verarbeitung der 3D-Daten erreichen. Zu bemerken ist, dass das Mesh z. B. wie in der Publikation "F. Isgro, F. Odone, W. Saleem and & O. Schal, Clustering for Surface Reconstruction, 1st International Workshop towards Semantic Virtual Environments, Villars, Switzerland: MIRALab., 156-162 (2005)" beschrieben, auf die hiermit Bezug genommen und deren Offenbarung in die vorliegende Erfindungsbeschreibung vollumfänglich mit einbezogen wird, oder wie in der Publikation "F. Zhou, Y. Zhao, K.-Liu Ma, Parallel mean shift for interactive volume segmentation, Machine learning in medical imaging, Lecture notes in Computer science, 67-75 (2010)" beschrieben, auf die hiermit ebenfalls Bezug genommen und deren Offenbarung in die vorliegende Erfindungsbeschreibung vollumfänglich mit einbezogen wird, mittels eines Mean-Shift-Verfahrens oder mittels eines Marching-Cubes-Verfahrens, oder mittels eines Poisson-Rekonstruktionsverfahrens, wie es in der Publikation "M. Kazhdan, M. Bolitho, H. Hoppe, Poisson surface reconstruction, Proceedings of the fourth Eurographics symposium on Geometry processing (SGP '06), Eurographics Association, Aire-la-Ville, Switzerland, Switzerland, 61-70 (2006)", auf die hiermit Bezug genommen und deren Offenbarung in die vorliegende Erfindungsbeschreibung vollumfänglich mit einbezogen wird, oder in der Publikation "M. Kazhdan, Michael & Bolitho, Matthew & Hoppe, Hugues, Screened Poisson Surface Reconstruction, ACM Transactions on Graphics, 32. 61-70 (2006)" angegeben ist, auch auf die hiermit Bezug genommen und deren Offenbarung in die vorliegende Erfindungsbeschreibung vollumfänglich mit einbezogen wird, aus dem 3D-Voxel-Gitter extrahiert werden kann.

Unter einer Punktwolke wird vorliegend eine Menge von Punkten eines Vektorraums verstanden, die eine unorganisierte räumliche Struktur aufweist. Die Punkte repräsentieren Punkte auf der Oberfläche des 3D-Objekts. Die Punktewolke ist meist ein Zwischenschritt bei der Berechnung eines 3D-Modells mit Mesh und Textur.

Zu bemerken ist auch, dass das Mesh Knotenpunkte mit Texturkoordinaten aufweisen kann, wobei die Texturkoordinaten in ein Texturbild mit Texturinformationen verweisen, welches berechnet wird, indem die erfassten ersten Bilder unter Nutzung der intrinsischen und extrinsischen Abbildungsparameter der Bilderfassungseinrichtungen auf die 3D-Rekosntruktion projiziert und überblendet werden, wie in der Publikation "A. Baumberg, Blending Images for Texturing 3D Models, BMVC (2002)" auf S. 5 beschrieben, auf die hiermit Bezug genommen und deren Offenbarung in die vorliegende Erfindungsbeschreibung vollumfänglich mit einbezogen wird.

Unter einem Texturbild ist vorliegend ein Bild zu verstehen, das Eigenschaften der Erscheinung der Oberflächenpunkte einer 3D-Rekonstruktion eines Objekts beschreibt, insbesondere die Farbe und die Reflexionseigenschaften. Texturen können aus Farbwerten bestehen, z. B. 2D-Bildern. Zusätzlich können aber auch Reflexionseigenschaften des Objekts in einer Textur gespeichert werden. Das sogenannte "Texture Mapping" ist eine Abbildung, die jedem 3D-Punkt auf der Oberfläche des Objekts bzw. auf dem Mesh eine oder mehrere Texturkoordinaten zuordnet. Die Texturkoordinaten bestimmen die Zuordnung der Texturpunkte zu den 3D-Punkten der Objektoberfläche.

Um die Reflexionseigenschaften des rekonstruierten Objekts zu schätzen, kann der Intensitätsverlauf entlang der Objektpunkttrajektorien analysiert werden. Bei rein diffus reflektierenden Oberflächenpunkten ist dieser Intensitätsverlauf über verschiedene Objektanordnungen relativ zur Bilderfassungseinrichtung weitgehend konstant. Bei ansteigendem spekularen Anteil weicht die Intensität zunehmend vom konstanten Verlauf ab. Aus dieser Information kann analog zum diffusen Texturbild, d.h. der reinen Farbinformation, ein spekulares Texturbild erzeugt werden.

Das Texturbild kann z. B. durch Projektion der ersten Bilder auf das Mesh berechnet werden. Alternativ kann auch der Farb- bzw. Intensitätswert aus dem mehrkanaligen 3D-Voxel-Gitter auf das Mesh übertragen werden, z.B. als Mittelwert der direkten Voxel-Nachbarschaft des jeweiligen Mesh-Knotens. Aus dem 3D-Voxel-Gitter können über Ableitungsfilter Meshnormalen berechnet werden.

Indem aus den zweiten Bildern eine Texturtransparenz berechnet wird, enthält die 3D-Rekonstruktion des Objekts die Information der berechneten Texturtransparenz.

Die Texturtransparenz beschreibt die Lichtdurchlässigkeit einer Oberfläche eines 3D-Objekts. Diese wird im sogenannten Alpha-Kanal einer Textur zusätzlich zur Farbinformation gespeichert. Der Alpha-Kanal nimmt meist Werte im Intervall [0,1] an. Der Wert 1 bedeutet, dass die Textur an dieser Stelle opak ist, der Wert 0 dagegen, dass die Textur unsichtbar ist. Für Zwischenwerte im Bereich [0,1] wird die Textur mit dahinter liegenden Texturen linear interpoliert. Um die Texturtransparenz zu bestimmen, kann der sogenannte Alpha-Kanal der Textur aus den erfassten zweiten Bildern geschätzt werden, indem die Knotenpunkte des Meshs in die einzelnen erfassten zweiten Bilder projiziert werden. Je heller der abgebildete Punkt in den erfassten Bildern ist, umso transparenter ist die Textur und umso geringer der Alpha-Wert.

Mit dem Berechnen der Texturtransparenz lässt sich erreichen, dass die Transparenz der Textur aus den zweiten Bildern zu unterschiedlichen Anordnungen des Objekts relativ zu der wenigstens einen Bilderfassungseinrichtung bei Beleuchten des Objekts mit Beleuchtungslicht bestimmt werden kann, das wenigstens teilweise in dem Objektabbildungsstrahlengang zu der wenigstens einen Bilderfassungseinrichtung geführt ist.

Insbesondere kann aus den ersten und/oder zweiten Bildern ein spekulares Texturbild berechnet werden, wobei die 3D-Rekonstruktion des Objekts die Information des berechneten Texturbilds enthält.

Indem die erfassten Bilder Farbbilder sind, lässt sich eine große Genauigkeit der berechneten 3D-Rekonstruktion des Objekts erreichen, weil auf diese Weise die Information von z. B. 3 Farbkanälen und nicht nur die Information eines einzigen Graustufenkanals ausgewertet werden kann.

Von Vorteil ist es insbesondere, die 3D-Rekonstruktion des Objekts durch Verrechnen von mehreren 3D-Farbkanalrekonstruktionen des Objekts zu bestimmen, insbesondere durch Mittelung oder robustes Schätzen, etwa in einem RANSAC-Verfahren, wobei dann eine jede 3D-Farbkanalrekonstruktion aus den Bilddaten der ersten und zweiten Bilder für einen Farbkanal und/oder für einen Textur-Transparenzkanal berechnet wird. Auf diese Weise lässt sich die Genauigkeit einer berechneten 3D-Rekosntruktion des Objekts auch bei unterschiedlichen Objektgeometrien weiter erhöhen. Eine berechnete 3D-Rekonstrutkion des Objekts kann Texturinformationen aufweisen.

Indem eine Ansicht des Objekts in die Bilderfassungseinrichtung gespiegelt wird, lässt sich erreichen, dass eine Bilderfassungseinrichtung das Objekt auf unterschiedlichen Seiten erfassen und auch Strukturen aufnehmen kann, die gegebenenfalls verdeckt sind.

Von Vorteil ist es, wenn das Berechnen der 3D-Rekonstruktion des Objekts das Berechnen einer visuellen Hülle, wie in der Publikation "Y. Shuntaro et al., The Theory and Practice of Coplanar Shadowgram Imaging for Acquiring Visual Hulls of Intricate Objects, International Journal of Computer Vision 81, 259-280 (2008)" beschrieben, auf die hiermit Bezug genommen und deren Offenbarung in die vorliegende Erfindungsbeschreibung vollumfänglich mit einbezogen wird, oder in der Publikation "G. Haro, "Shape from silhouette consensus and photo-consistency, 2014 IEEE International Conference on Image Processing (ICIP), Paris, 4837-4841 (2014)" beschrieben, auch auf die hiermit Bezug genommen und deren Offenbarung in die vorliegende Erfindungsbeschreibung vollumfänglich mit einbezogen wird, von aus den Bilddaten der zweiten Bildern berechnete Silhouetten des Objekts umfasst.

Unter der Silhouette eines Objekts ist vorliegend ein Binärbild als Ergebnis einer perspektivischen Projektion des Objekts auf die Bildebene einer Bilderfassungseinrichtung zu verstehen, wobei genau die Punkte der Bildebene zur Silhouette gehören, auf die mindestens ein Objektpunkt abgebildet wird.

Das Berechnen der visuellen Hülle von aus den zweiten Bilddaten bzw. aus den Bilddaten der zweiten Bilder berechneten Silhouetten des Objekts bewirkt eine weitere Steigerung der Genauigkeit einer berechneten 3D-Rekonstruktion des Objekts, weil eine visuelle Hülle des Objekts eine gute Näherung des Objekts angibt. Bei dem Berechnen der 3D-Rekonstruktion des Objekts kann insbesondere ein Abstand eines berechneten 3D-Voxels von der visuellen Hülle berücksichtigt werden.

Die Erfindung erstreckt sich auch auf das Visualisieren einer in einem vorstehenden Verfahren erzeugten 3D-Rekonstruktion eines Objekts, insbesondere eines Brillenglases mit einem Mesh auf einer Anzeigefläche eines Bildanzeigegeräts, insbesondere eines Displays. Darüber hinaus erstreckt sich die Erfindung auch auf ein Computerprogramm mit Programmcode zur Durchführung des vorstehend angegebenen Verfahrens insbesondere mittels einer vorstehend angegebenen Vorrichtung zum Erzeugen einer 3D-Rekonstruktion eines Objekts.

Vorteilhafte Ausführungsbeispiele der Erfindung sind in der Fig. 2 bis Fig. 5 schematisch dargestellt und werden nachfolgend beschrieben.

Es zeigen:

Fig. 2 eine Seitenansicht einer Vorrichtung zum Erzeugen einer 3D-Rekonstruktion eines Objekts;

Fig. 3 eine Draufsicht der Vorrichtung zum Erzeugen einer 3D-Rekonstruktion eines Objekts;

Fig. 4 einen ersten Algorithmus eines Computerprogramms für eine Rechnereinheit in der Vorrichtung zum Erzeugen einer 3D-Rekosntruktion eines Objekts; und

Fig. 5 einen zweiten Algorithmus eines Computerprogramms für die Rechnereinheit in der Vorrichtung zum Erzeugen einer 3D-Rekosntruktion eines Objekts.

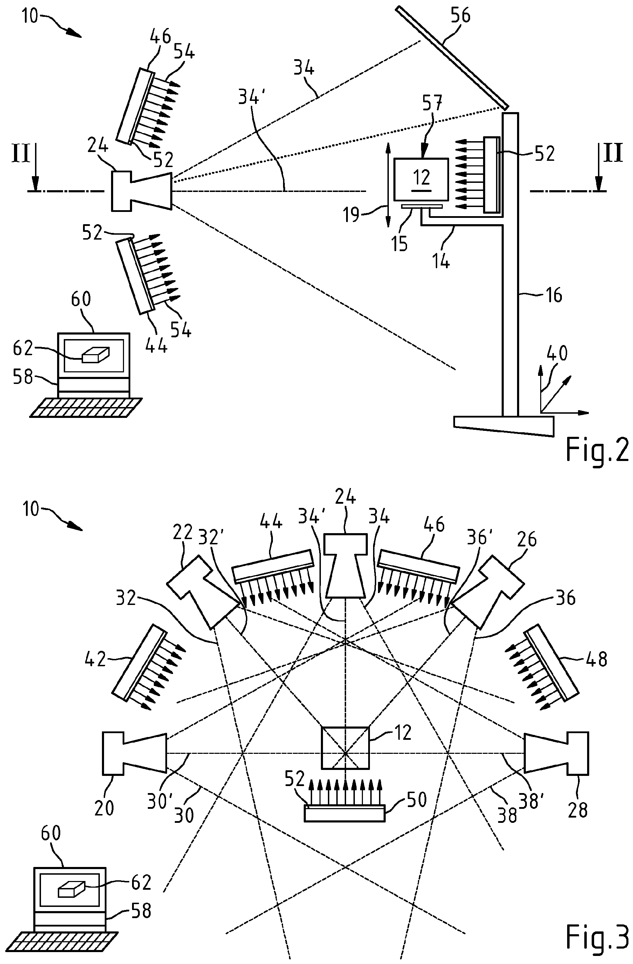

Die in der Fig. 2 gezeigt Vorrichtung 10 dient zum Erzeugen einer 3D-Rekonstruktion eines Objekts 12. Das Objekt 12 kann z. B. eine Brillenfassung sein. In der Vorrichtung 10 gibt es eine Einrichtung zur Bewegung des Objekts 12 mit einem an einem Haltearm 14 aufgenommenen Objektträger 15 in Form eines Hubtisches. Der Haltearm 14 des Objektträgers 15 ist an eine in eine Längsrichtung erstreckte Säule 16 angeschlossen. Die Fig. 3 ist eine Draufsicht der Vorrichtung 10 aus Fig. 2 auf die dort mittels der Pfeile II-II kenntlich gemachte Ebene 18.

Der Haltearm 14 des Objektträgers 15 kann an der Säule 16 in der Richtung des Doppelpfeils 19 parallel zu der Längsrichtung der Säule 16 motorisch verlagert werden.

Die Vorrichtung 10 enthält eine erste Bilderfassungseinrichtung 20, eine zweite Bilderfassungseinrichtung 22, eine dritte Bilderfassungseinrichtung 24, eine vierte Bilderfassungseinrichtung 26 und eine fünfte Bilderfassungseinrichtung 28. Die Bilderfassungseinrichtungen 20, 22, 24, 26 und 28 sind vorliegend als Kameras ausgebildet, die jeweils ein Objektivlinsensystem aufweisen und einen flächigen Bildsensor in Form eines CCD-Sensors enthalten. Die Bilderfassungseinrichtungen 20, 22, 24, 26 und 28 ermöglichen jeweils das Aufnehmen von Bildern des auf dem Objektträger 15 angeordneten Objekts 12 mit einem Objektabbildungsstrahlengang 30, 32, 34, 36 und 38 aus unterschiedlichen Aufnahmerichtungen 30', 32', 34', 36' und 38' in Bezug auf ein zu der Säule 16 ortsfestes Koordinatensystem 40. Zu dem Objekt 12 kann damit in der Vorrichtung 10 eine Vielzahl von Bildern des Objekts 12 mit Bilddaten bei unterschiedlichen Anordnungen des Objekts 12 relativ zu den Bilderfassungseinrichtungen 20, 22, 24, 26 und 28 erfasst werden. In der Vorrichtung 10 gibt es einen Spiegel 56, der den Objektabbildungsstrahlengang 34 der Bilderfassungseinrichtung 24 auf eine der Bilderfassungseinrichtung 24 abgewandte Seite 57 des Objekts 12 lenkt.

Die Bilderfassungseinrichtungen 20, 22, 24, 26 und 28 sind für das Erfassen von einfarbigen Bildern, insbesondere Bildern in Schwarz-Weiß ausgelegt. Zu bemerken ist allerdings, dass eine alternative Ausführungsform der Vorrichtung 10 auch für das Erfassen von farbigen Bildern ausgelegte Bilderfassungseinrichtungen 20, 22, 24, 26 und 28 aufweisen kann.

Die Vorrichtung 10 enthält mehrere Lichtquellen 42, 44, 46, 48 und 50 als eine Einrichtung für das Beleuchten des Objekts 12 mit Beleuchtungslicht. Die Lichtquellen 42, 44, 46, 48 und 50 haben jeweils einen flächigen Leuchtkörper 52, der für das Bereitstellen von diffusem Beleuchtungslicht 54 dient. In der Vorrichtung 10 ermöglicht die Lichtquelle 42 das Beleuchten des Objekts 12 mit diffusem Licht, das in Bezug auf den Objektabbildungsstrahlengang 30, 32, 34 und 36 wenigstens teilweise das Objekt 12 beleuchtendes Auflicht ist.

Die Lichtquelle 44 stellt in der Vorrichtung 10 Beleuchtungslicht 54 bereit, das in Bezug auf den Objektabbildungsstrahlengang 30, 32, 34 und 36 wenigstens teilweise das Objekt 12 beleuchtendes Auflicht ist. Mittels der Lichtquelle 46 kann in der Vorrichtung 10 Beleuchtungslicht bereitgestellt werden, das in Bezug auf den Objektabbildungsstrahlengang 32, 34, 36 und 38 wenigstens teilweise das Objekt 12 beleuchtendes Auflicht ist. Die Lichtquelle 48 erzeugt in der Vorrichtung 10 Beleuchtungslicht, das in Bezug auf den Objektabbildungsstrahlengang 32, 34, 36 und 38 wenigstens teilweise das Objekt 12 beleuchtendes Auflicht ist.

Die Lichtquelle 50 ermöglicht das Bereitstellen von Beleuchtungslicht 54, das wenigstens teilweise in dem Objektabbildungsstrahlengang 34 zu der dritten Bilderfassungseinrichtung 24 geführt ist. Die Vorrichtung 10 weist eine Rechnereinheit 58 auf und hat ein Display 60 für das Visualisieren eine 3D-Rekonstruktion 62 des Objekts 12. Die Rechnereinheit 58 ist mit den Bilderfassungseinrichtungen 20, 22, 24, 26 und 28 verbunden. Sie dient einerseits für das Steuern der Bilderfassungseinrichtungen 20, 22, 24, 26 und 28 sowie der Lichtquellen 42, 44, 46, 48 und 50 und Einrichtung zur Bewegung des Objekts 12. Andererseits dient die Rechnereinheit 58 für das Erfassen und Verarbeiten von aus den Bilderfassungseinrichtungen 20, 22, 24, 26 und 28 zugeführten Bilddaten von Bildern mittels eines Computerprogramms, die in der Vorrichtung 10 bei unterschiedlichen Anordnungen des Objekts 12 in der Vorrichtung 10 aufgenommen werden, indem das Objekt 12 vorzugsweise gleichzeitig mittels der Bilderfassungseinrichtungen 20, 22, 24, 26 und 28 erfasst und durch Verlagern des Haltearms 14 in dem zu der Säule 16 ortsfesten Koordinatensystem 40 in unterschiedlichen Positionen angeordnet wird. Diese Maßnahme bewirkt, dass das Objekt 12 mittels der Bilderfassungseinrichtungen aus unterschiedlichen Aufnahmerichtungen erfasst wird. Das Computerprogramm in der Rechnereinheit 58 berechnet aus den Bilddaten der zu dem Objekt 12 mittels der Bilderfassungseinrichtungen 20, 22, 24, 26 und 28 aufgenommenen Bilder eine an dem Display 60 zur Anzeige gebrachte 3D-Rekonstruktion 62 des Objekts 12.

Zu bemerken ist, dass bei einer alternativen, modifizierten Ausführungsform der Vorrichtung 10 vorgesehen sein kann, dass die Bilderfassungseinrichtungen 20, 22, 24, 26 und 28 verlagerbar und der Haltearm 14 mit dem Objektträger 15 in dem zu der Säule 16 ortsfesten Koordinatensystem 40 ortsfest ist, um das Erfassen einer Vielzahl von Bildern des Objekts mit Bilddaten bei unterschiedlichen Anordnungen des Objekts 12 relativ zu den Bilderfassungseinrichtungen 20, 22, 24, 26 und 28 zu ermöglichen.

Eine zu der vorstehend beschriebenen Bauform der Vorrichtung 10 alternativen Bauform sieht vor, dass für das Erfassen einer Vielzahl von Bildern des Objekts mit Bilddaten bei unterschiedlichen Anordnungen des Objekts 12 relativ zu den Bilderfassungseinrichtungen 20, 22, 24, 26 und 28 sowohl der Objektträger 15 als auch die Bilderfassungseinrichtungen 20, 22, 24, 26 und 28 der Vorrichtung 10 verlagert werden. Zu bemerken ist, dass alternativ oder zusätzlich auch vorgesehen sein kann, dass der Objektträger 15 in dem zu der Säule 16 ortsfesten Koordinatensystem 40 um eine vertikale Achse relativ zu den Bilderfassungseinrichtungen 20, 22, 24, 26 und 28 gedreht wird. Es ist allerdings auch möglich, die Bilderfassungseinrichtungen 20, 22, 24, 26 und 28 drehbar anzuordnen, damit diese eine Drehbewegung um ein auf dem Objektträger 15 angeordnetes Objekt 12 ausführen können.

Die intrinsischen und extrinsischen Abbildungsparameter der Bilderfassungseinrichtungen 20, 22, 24, 26 und 28 sind in der Vorrichtung 10 derart kalibriert, dass die Raumposition des Objektträgers 15 relativ zu den Bilderfassungseinrichtungen in dem Koordinatensystem 40 bei dem Erfassen eines einzelnen Bilds des Objekts 12 bekannt ist.

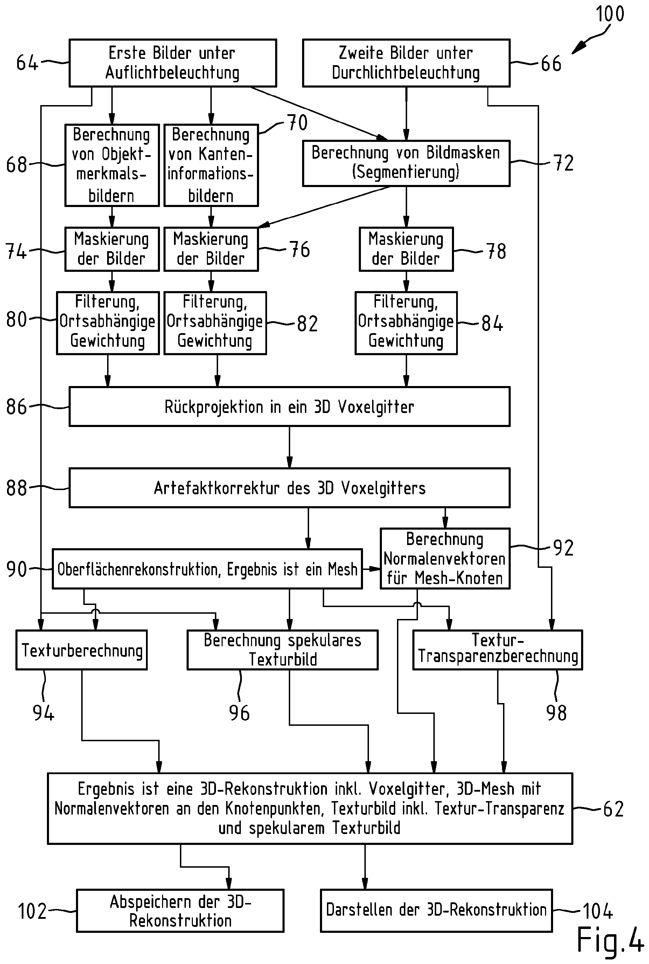

Anhand der Fig. 4 wird nachfolgend der in dem Computerprogramm in der Rechnereinheit 58 für das Berechnen der 3D-Rekonstruktion 62 des Objekts 12 umgesetzte Algorithmus 100 beschrieben. Der Algorithmus 100 ermöglicht die 3D-Rekonstruktion 62 des Objekts 12 als eine tomografische 3D-Rekonstruktion.

In einem ersten Schritt wird eine Vielzahl von ersten Bildern 64 in verschiedenen Anordnungen des zu rekonstruierenden Objekts 12 relativ zu der mindestens einen Bilderfassungseinrichtung 20, 22, 24, 26, 28 aufgenommen, wobei das Objekt 12 mit Beleuchtungslicht erfasst wird, das in Bezug auf den Objektabbildungsstrahlengang 30, 32, 34 und 36 wenigstens teilweise das Objekt 12 beleuchtendes Auflicht ist. Gleichzeitig wird zu den gleichen Anordnungen des Objekts relativ zu der mindestens einen Bilderfassungseinrichtung 20, 22, 24, 26, 28 eine Vielzahl von zweiten Bildern 66 erfasst. Hier wird das Objekt 12 mit Beleuchtungslicht aufgenommen, das wenigstens teilweise in dem Objektabbildungsstrahlengang 30, 32, 34, 36 zu der wenigstens einen Bilderfassungseinrichtung 20, 22, 24, 26, 28 geführt ist.

Sowohl die ersten als auch die zweiten Bilder 64, 66 werden gefiltert, insbesondere um Rauschen zu unterdrücken oder Kanten zu schärfen, z. B. mittels eines Gaussfilters, eines Ram-Lak-Filters oder eines speziellen durch maschinelles Lernen trainierten Filters. Zu bemerken ist allerdings, dass eine alternative Ausführungsform des Algorithmus auch ohne dieses Filtern der ersten und zweiten Bilder 64, 66 ausgebildet sein kann.

In dem Algorithmus 100 werden aus den ersten Bildern 64, bei denen das Objekt 12 wenigstens teilweise in Bezug auf den entsprechenden Objektabbildungsstrahlengang mit Auflicht beleuchtet wird, zum einen Objektmerkmalsbilder 68 und zum anderen Kanteninformationsbilder 70 berechnet.

Für die Merkmalsbilder ist in dem Algorithmus 100 vorgesehen, dass ein jedes detektierte Merkmal als ein rotationssymmetrischer Fleck mit z. B. einem Gaußförmigem Profil eingetragen ist:

$$(x,y) \rightarrow \frac{1}{2\pi\sigma^2} e^{-\frac{(k-x)^2+(l-y)^2}{2\sigma^2}},$$

wobei $(x,y)$ die subpixelgenauen Pixelkoordinaten des jeweiligen Merkmals und $(k,l)$ die ganzzahligen Pixelkoordinaten im Merkmalsbild darstellen. Die Breite $\sigma$ des Gaußflecks kann dabei grundsätzlich frei gewählt werden.

Zu bemerken ist, dass alternativ hierzu auch vorgesehen sein kann, dass ein Merkmalsbild ein Bild sein kann, das aus Filterantworten bei Merkmalserzeugung mittels Kernel-basierter Detektion hervorgeht, wie dies in dem Buch "B. Jähne, Digitale Bildverarbeitung, Springer Verlag, Berlin (1997)" beschrieben ist, auf das hiermit Bezug genommen und dessen Offenbarung in die vorliegende Erfindungsbeschreibung vollumfänglich mit einbezogen wird.

Demgegenüber werden aus den zweiten Bildern 66, die mit Beleuchtungslicht erfasst werden, das wenigstens teilweise in dem Objektabbildungsstrahlengang zu der entsprechenden Bilderfassungseinrichtung geführt ist, in einem Rechenschritt 72 Bildmasken 74, 76 und 78 mittels Segmentierung berechnet.

Opake Stellen des Objekts 12 erscheinen im Bild bei Beleuchtungslicht, das wenigstens teilweise in dem Objektabbildungsstrahlengang 30, 32, 34 und 36 zu der wenigstens einen Bilderfassungseinrichtung 20, 22, 24, 26, 28 geführt ist, als schwarze Pixel, lichtdurchlässige Stellen dagegen als Grauwerte, deren Intensität von der Lichtdurchlässigkeit des Objekts 12 abhängt. Um die Bildmasken 74, 76, 78 zu berechnen, wird deshalb allen Pixeln, deren Intensität signifikant von der des Lichts abweicht, der Wert 1 zugewiesen. Mittels der zugehörigen berechneten Bildmasken 74, 76, 78 wird der Hintergrund der Objektmerkmalsbilder 68 und der Kanteninformationsbilder 70 sowie der zweiten Bildern 66 ausmaskiert, die mit Beleuchtungslicht erfasst werden, das wenigstens teilweise in dem Objektabbildungsstrahlengang zu der entsprechenden Bilderfassungseinrichtung geführt ist. Es werden somit nur die Pixel zur 3D-Rekonstruktion verwendet, die innerhalb einer Bildmaske 74, 76, 78 liegen, d. h. denen der Wert 1 in der Bildmaske 74, 76, 78 zugeordnet wird.

In einem nächsten Schritt wird ein dreidimensionales Voxel-Gitter konstruiert, dessen Auflösung, d. h. vorliegend dessen Anzahl Voxel pro Raumrichtung der Zielgenauigkeit für die 3D-Rekonstruktion des Objekts 12 entspricht. Ein jedes Voxel enthält hier zwei Datenkanäle, nämlich einen Datenkanal für Informationen aus den Bilddaten der ersten Bilder 64 und einen Datenkanal für Informationen aus den Bilddaten der zweiten Bilder 66.

Zu bemerken ist, dass in dem Fall einer Vorrichtung, in der es Bilderfassungseinrichtungen für das Erfassen von farbigen Bildern gibt, der in dem Computerprogramm der Rechnereinheit 58 für das berechnen der 3D-Rekonstruktion 62 des Objekts 12 umgesetzte Algorithmus vorsehen kann, dass ein jedes Voxel bis zu sechs Datenkanäle enthält. Ein jedes Voxel weist dann erste Datenkanäle für einen jeden der drei Farbkanäle zu Bildern auf, bei denen das Objekt 12 wenigstens teilweise in Bezug auf den entsprechenden Objektabbildungsstrahlengang mit Auflicht beleuchtet wird, und zweite Datenkanäle für einen jeden der drei Farbkanäle zu Bildern, die mit Beleuchtungslicht erfasst werden, das wenigstens teilweise in dem Objektabbildungsstrahlengang zu der entsprechenden Bilderfassungseinrichtung geführt ist.

In dem Algorithmus 100 werden für einen jeden Datenkanal die zu diesem Datenkanal gehörenden Bilddaten in einem Rechenschritt 86 auf das 3D-Voxel-Gitter rückprojiziert und dabei gefiltert sowie mittels einer Gewichtungsfunktion 80, 82, 84 gewichtet. Dazu wird ein jedes Voxel in alle zu dem Datenkanal gehörenden Bilder auf ein Pixel projiziert. Liegt dabei das Pixel, auf welches das Voxel projiziert wird, innerhalb der zum Bild gehörenden Bildmaske 74, 76, 78, so wird seine Intensität mit der Gewichtungsfunktion multipliziert. Die Gewichtungsfunktion 80, 82, 84 kann dabei von dem Ort eines betrachteten Voxels in dem 3D-Voxel-Gitter und von einem Pixel, auf das das Voxel projiziert wird, abhängen, insbesondere vom Abstand des Voxels zur Bilderfassungseinrichtung 20, 24, 26, 28 bei Erfassung des zugehörigen Bildes.

Die mit der Gewichtungsfunktion 80, 82, 84 gewichteten Intensitätswerte werden aufsummiert und es wird dann der sich ergebende Wert dem betrachteten Voxel des 3D-Voxel-Gitters in dem jeweiligen Datenkanal zugewiesen. Die Informationen aus den bis zu sechs Datenkanälen können dabei zu einem 3D-Voxel-Gitter mit nur einem Datenkanal verrechnet werden.

Zu bemerken ist, dass aufgrund einer Redundanz der miteinander verrechneten Daten bei der berechneten 3D-Rekonstruktion Fehler minimiert werden können, indem entsprechende Daten innerhalb eines Datenkanals gemittelt werden.

In einem nächsten Schritt 88 erfolgt dann eine Artefaktkorrektur für das 3D-Voxel-Gitter. Dazu können Filter und/oder neuronale Netze verwendet werden. Darauf wird in einem weiteren Schritt 90 aus dem 3D-Voxel-Gitter ein Mesh berechnet, das Eigenschaften der Oberfläche des 3D-Objekts beschreibt.

Dazu werden Punkte mit lokalem Intensitätsmaximum nach dem Mean-Shift-Verfahren bestimmt, wie es in der Publikation "F. Zhou, Y. Zhao, K.-Liu Ma, Parallel mean shift for interactive volume segmentation, Machine learning in medical imaging, Lecture notes in Computer science, 67-75 (2010)" angegeben ist, auf die hiermit Bezug genommen und deren Offenbarung in die vorliegende Erfindungsbeschreibung vollumfänglich mit einbezogen wird.

Dabei wird das 3D-Voxel-Gitter mit einer festen Schrittweite abgetastet. In einem jeden Schritt wird hierfür ein nächstliegendes Intensitätsmaximum bestimmt. Hierbei kann die visuelle Hülle genutzt werden, um den Suchbereich für die möglichen Intensitätsmaxima einzuschränken. Hierzu wird folgendes iteratives Verfahren gewählt: Es wird eine dreidimensionale Fensterfunktion verwendet, die z.B. unter

https://de.wikipedia.org/wiki/Fensterfunktion

beschrieben ist, wobei z.B. von einem Gauss-förmigen Fenster Gebrauch gemacht wird. In einem ersten Schritt wird der zweidimensionale Massenschwerpunkt der Werte des 3D-Voxel-Gitters innerhalb dieses Fensters bestimmt.

In einem zweiten Schritt wird das Fenster zu dem Massenschwerpunkt hin verschoben. Diese beiden Schritte werden iterativ wiederholt, bis ein stabiler Schwerpunkt erreicht wird, d.h. bis die Bewegung des Fensters betragsmäßig einen Schwellwert unterschreitet. Zu bemerken ist, dass dieser Schwellwert deutlich unterhalb der Zielgenauigkeit liegen sollte. Bei einer Zielgenauigkeit von 0.1 mm kann z.B: ein Schwellwert von 0.01 mm oder darunter, insbesondere bis zur maximal erreichbaren Rechengenauigkeit gewählt werden. Die erzeugten Punkte in Form lokaler Intensitätsmaxima bilden denn die gesuchte Punktewolke, wie es z.B. in der Buchveröffentlichung "J.A. Sethian, Level Set Methods and Fast Marching Methods Evolving Interfaces in Computational Geometry, Fluid Mechanics, Computer Vision, and Materials Science"; Cambridge University Press (1999)" beschrieben ist, auf die hiermit Bezug genommen und deren Offenbarung in die vorliegende Erfindungsbeschreibung vollumfänglich mit einbezogen wird.

Alternativ hierzu ist es auch möglich, das 3D-Voxel-Gitter unter Verwendung eines Hochpassfilters oder unter Verwendung globaler oder lokal adaptiver Schwellwerte zu binarisieren, so dass ein jedes Voxel den Wert 0 oder 1 aufweist. Die Berechnung des lokal adaptiven Schwellwertes kann auf Basis eines lokalen Mittelwerts oder Medians oder Quantils erfolgen. Das binarisierte 3D-Voxel-Gitter kann durch morphologische Filter noch entsprechend optimiert werden, um Fehler zu minimieren. Ach der Binarisierung des 3D-Voxel-Gitters wird die Oberfläche des zu rekonstruierenden Objekts genau durch die 0-1-Übergänge an benachbarten Voxeln im 3D-Voxel-Gitter beschrieben, da hier der Übergang von außerhalb des Objekts liegenden Voxeln mit Wert 0 zu innerhalb des Objekts liegenden Voxeln mit Wert 1 stattfindet. An diesen 0-1-Übergängen wird jeweils ein 3D-Punkt generiert. Diese Oberflächenpunkte bilden dann eine die Oberfläche des 3D-Objekts repräsentierende Punktewolke.

Für das Abtasten des Voxelvolumens mit einer festen Schrittweite wird in jedem Schritt ein Fenster ausgeschnitten und ein lokaler Schwellwert gebildet, beispielsweise basierend auf dem Mittelwert oder dem Median oder einem Quantil. Hierfür kann beispielsweise das Schwellwertverfahren von Otsu eingesetzt werden, das in der Publikation "M. Sezgin, B. Sankur, Survey over image thresholding techniques and quantitative performance evaluation, Journal of Electronic Imaging. 13 (1), 146-165 (2004)" beschrieben ist. Die Schrittweite und die Fenstergröße kann hier wesentlich größer gewählt werden. Das binarisierte Volumen kann optional auch noch mit sogenannten morphologischen Filtern verkleinert werden oder skelettiert werden und anschließend die Oberfläche extrahiert werden. Dabei werden 3D-Punkte an den Stellen mit 0→1 Übergang generiert. Insgesamt kann so eine Punktewolke erhalten werden.

Hierfür werden in einer Berechnungsroutine 92 die Normalenvektoren für die Meshknoten berechnet, insbesondere durch Anwendung von Ableitungsfiltern, die benachbarte Voxel im Gitter betrachten. In einer Rechenroutine 94 wird dann aus den ersten Bildern 64 und dem Mesh eine Textur berechnet. Darüber hinaus wird in dem Algorithmus aus den ersten Bildern 64 und dem Mesh einer Rechenroutine 96 ein spekulares Texturbild berechnet, indem die Veränderung der Intensität der Projektion des Meshpunktes in den verschiedenen erfassten Bildern bzw., wenn farbige Bilder erfasst werden, die Farbe der Projektion des Meshpunktes in die verschiedenen erfassten Bilder analysiert und daraus zum einen ein diffuser Farbanteil und zum anderen ein spekularer Farbanteil abgeschätzt wird.

Zu bemerken ist, dass sich bei einem rein diffusen Farbanteil die Farbe fast gar nicht verändert. Bei einem starken spekularen Farbanteil verändert sich jedoch die Farbe deutlich je nach Anordnung des Objekts 12 relativ zu der mindestens einen Bilderfassungseinrichtung 20, 22, 24, 26, 28 und den Beleuchtungseinrichtungen. Aus den zweiten Bildern 66 wird in dem Algorithmus 100 in einer Rechenroutine 98 eine Texturtransparenz berechnet, indem zu jedem Meshpunkt die Intensität der Projektion dieses Punktes in die verschiedenen zweiten Bilder 66 analysiert wird. Je heller die Intensität der zugehörigen Pixel ist, desto lichtdurchlässiger ist die Oberfläche an der Stelle dieses Meshpunkts.

Die sich aus den vorhergehenden Berechnungsschritten ergebende 3D-Rekonstruktion 62 des Objekts 12 umfasst ein 3D-Voxel-Gitter und ein 3D-Mesh mit Normalenvektoren an den Knotenpunkten zusammen mit einer Textur, die ein spekulares Texturbild und eine Texturtransparenz enthält.

Der Algorithmus 100 weist eine Speicherroutine 102 für das Abspeichern der 3D-Rekonstruktion 62 des Objekts 12 auf und enthält eine Anzeigeroutine 104 für das Anzeigen der 3D-Rekonstruktion 62 des Objekts 12 auf dem Display 60 in der Vorrichtung 10. Für das Abspeichern bieten sich hier verschiedene Formate an, um möglichst viel Speicherplatz zu sparen, insbesondere effiziente Speicherstrukturen wie sogenannte Octrees, Nested Grids oder Bounding Volume Hierarchies, sowie Verfahren wie das sogenannte Binary Space Partitioning. Die Einsparung von Speicherplatz beruht darauf, dass die visuelle Hülle die konvexe Hülle des zu rekonstruierenden Objekts darstellt. Nur Voxel innerhalb der visuellen Hülle können somit den Wert 1 aufweisen. Alle Voxel außerhalb der visuellen Hülle weisen den Wert 0 in allen Datenkanälen auf. Zu bemerken ist, dass sich damit eine Reduktion R des Speicherplatzes in Bezug auf eine Ursprungsgröße U hierfür erreichen lässt mit $U \approx 10\%$ und u.A. auch $2\% \leq U \leq 5\%$.

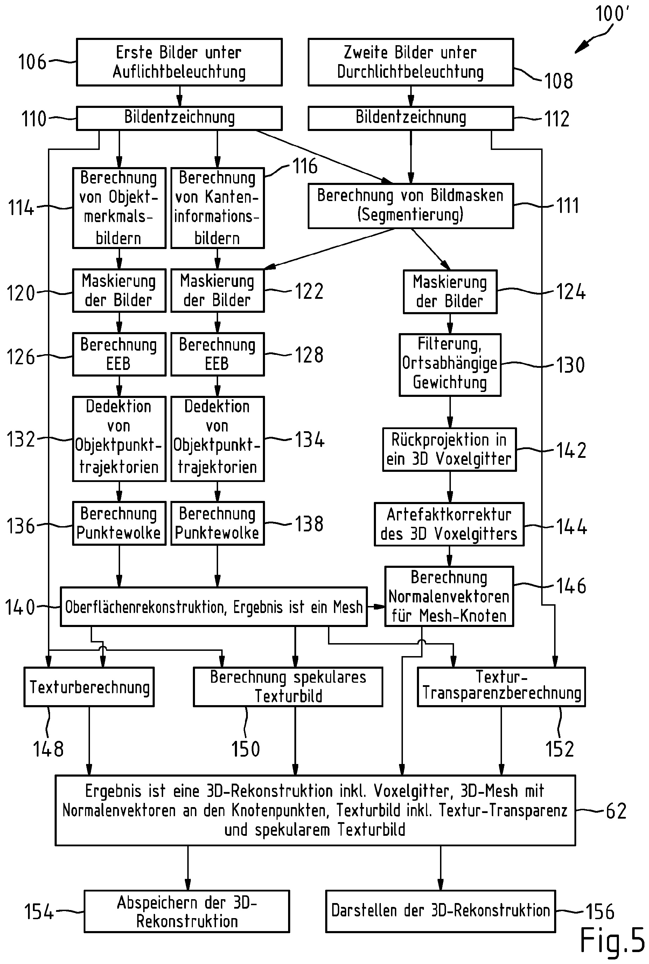

Die Fig. 5 dient der Erläuterung eines weiteren Algorithmus 100' für ein Computerprogramm, mittels dessen eine 3D-Rekonstruktion 62 des Objekts 12 in der Rechnereinheit 58 der Vorrichtung 10 berechnet werden kann. Der Algorithmus 100' ermöglicht eine epipolargeometrische 3D-Rekonstruktion des Objekts 12.

In einem ersten Schritt des Algorithmus 100' wird wiederum eine Vielzahl von ersten Bildern 106 in verschiedenen Anordnungen des zu rekonstruierenden Objekts 12 relativ zu der mindestens einen Bilderfassungseinrichtung 20, 22, 24, 26, 28 aufgenommen, wobei das Objekt 12 mit Beleuchtungslicht erfasst wird, das in Bezug auf den Objektabbildungsstrahlengang 30, 32, 34 und 36 wenigstens teilweise das Objekt 12 beleuchtendes Auflicht ist. Gleichzeitig wird zu den gleichen Anordnungen des Objekts 12 relativ zu der mindestens einen Bilderfassungseinrichtung 20, 22, 24, 26, 28 eine Vielzahl von zweiten Bildern 108 aufgenommen, wobei das Objekt 12 mit Beleuchtungslicht erfasst wird, das wenigstens teilweise in dem Objektabbildungsstrahlengang 30, 32, 34 und 36 zu der wenigstens einen Bilderfassungseinrichtung 20, 22, 24, 26, 28 geführt ist. In einem Entzeichnungsschritt 110, 112 werden dann die ersten und zweiten Bilder anhand bekannter Abbildungsparameter der Bilderfassungseinrichtungen 20, 22, 24, 26, 28 in der Vorrichtung 10 entzeichnet und gegebenenfalls rektifiziert.

Zu bemerken ist, dass bei einer alternativen Ausführungsform des Algorithmus 100' vorgesehen sein kann, dass sowohl die ersten als auch die zweiten Bilder 106, 108 gefiltert werden, insbesondere um Rauschen zu unterdrücken oder um Kanten zu schärfen.

Aus den ersten Bildern 106 werden wie in dem vorstehend beschriebenen Algorithmus 100 zum einen Objektmerkmalsbilder 114 und zum anderen Kanteninformationsbilder 116 berechnet. Aus den zweiten Bildern 108 werden wiederum in einem Rechenschritt 111 mittels Segmentierung Bildmasken 118, 120, 122 berechnet. Mit Hilfe der zugehörigen berechneten Bildmasken 120, 122, 124 wird ein Hintergrund sowohl der ersten als auch der zweiten aufgenommenen Bilder 106, 108 ausmaskiert, sodass nur die Pixel zur 3D-Rekonstruktion verwendet werden, die innerhalb der Bildmaske liegen, d. h. denen der Wert 1 in der Bildmaske zugeordnet wird. Aus den Objektmerkmalsbildern 114 und den Kanteninformationsbildern 116 werden hier nun Epipolarebenenbilder 126, 128 generiert, in denen Objektpunkttrajektorien 132, 134 detektiert werden. Durch die Berechnung der Steigung dieser Objektpunkttrajektorien 132, 134 kann mittels bekannter Abbildungsparameter der zugehörigen Bilderfassungseinrichtung 20, 22, 24, 26, 28 auf die Tiefe des zugehörigen 3D-Punkts relativ zur Bilderfassungseinrichtung 20, 22, 24, 26, 28 geschlossen werden. Dies ermöglicht, aus den Objektmerkmalsbildern 114 und den Kanteninformationsbildern 116 jeweils eine Punktewolke 136, 138 zu berechnen. Aufgrund der Verwendung von Merkmalsbildern und Kanteninformationsbildern ein- und desselben Objekts 12 bestehen vorliegend redundante Informationen, die für das Minimieren von Fehlern verrechnet werden.

In dem Algorithmus 100' wird dann aus den Punktewolken 136, 138 ein Mesh 140 berechnet. Wie in dem anhand der Fig. 3 beschriebenen Algorithmus 100 wird in dem Algorithmus 100' aus den maskierten zweiten Bildern 108 nach einer Filterung eine Rückprojektion 142 auf ein 3D-Voxel-Gitter mittels einer Gewichtungsfunktion 130 berechnet.

In einem nächsten Schritt 144 erfolgt eine Artefaktkorrektur des Voxel-Gitters. Dazu können Filter und/oder neuronale Netze verwendet werden. Wie in dem anhand der Fig. 3 beschriebenen Algorithmus 100' werden in einer Berechnungsroutine 146 die Normalenvektoren für die Meshknoten berechnet, insbesondere durch Anwendung von Ableitungsfiltern, die benachbarte Voxel im Gitter betrachten. In einer Rechenroutine 148 wird dann aus den ersten Bildern 106 und dem Mesh 140 eine Textur berechnet. Darüber hinaus wird in dem Algorithmus 100' aus den ersten Bildern 106 und dem Mesh 140 in einer Rechenroutine 150 ein spekulares Texturbild berechnet, indem hier wiederum die Veränderung der Intensität der Projektion des Meshpunktes in die verschiedenen erfassten Bilder bzw., wenn farbige Bilder erfasst werden, die Farbe der Projektion des Meshpunktes in die verschiedenen erfassten Bilder analysiert wird, um daraus einen diffusen und ein spekularen Farbanteil zu schätzen.

Wie in dem Fall des Algorithmus 100 verändert sich bei rein diffusem Farbanteil die Farbe fast gar nicht. Demgegenüber verändert sich die Farbe bei einem starken spekularen Anteil deutlich je nach Anordnung des Objekts in Bezug auf die mindestens eine Bilderfassungseinrichtung 20, 22, 24, 26, 28 und in Bezug auf die Lichtquellen 42, 44, 46, 48 und 50, die eine Einrichtung für das Beleuchten des Objekts 12 mit Beleuchtungslicht in der anhand der Fig. 2 und Fig. 2 beschriebenen Vorrichtung 10 zum Erzeugen einer 3D-Rekonstruktion eines Objekts 12 bilden. Aus den zweiten Bildern 108 wird dann in dem Algorithmus 100' in einer Rechenroutine 152 eine Texturtransparenz berechnet, indem zu jedem Meshpunkt die Intensität der Projektion dieses Punktes in die verschiedenen zweiten Bilder 108 analysiert wird. Je heller die Intensität der zugehörigen Pixel ist, desto lichtdurchlässiger ist die Oberfläche an der Stelle dieses Meshpunkts.

Die sich aus den vorhergehenden Berechnungsschritten ergebende 3D-Rekonstruktion 62 des Objekts 12 umfasst dann wiederum ein 3D-Voxel-Gitter und ein 3D-Mesh mit Normalenvektoren an den Knotenpunkten zusammen mit einer Textur, die ein spekulares Texturbild und eine Texturtransparenz enthält. Auch der Algorithmus 100' weist eine Speicherroutine 154 für das Abspeichern der 3D-Rekonstruktion 62 des Objekts 12 auf und enthält eine Anzeigeroutine 156 für das Anzeigen der 3D-Rekonstruktion 62 des Objekts 12 auf dem Display 60 in der Vorrichtung 10.

Zusammenfassend sind insbesondere folgende bevorzugte Merkmale der Erfindung festzuhalten: Das Erzeugen einer 3D-Rekonstruktion 62 eines Objekts 12 umfasst das Beleuchten des Objekts 12, das Erfassen von Bilddaten zu dem Objekt 12 und das Berechnen der 3D-Rekonstruktion 62 des Objekts 12 aus den Bilddaten. Die Bilddaten umfassen erste Bilddaten und zweite Bilddaten, wobei die ersten Bilddaten aus unterschiedlichen Aufnahmerichtungen

30', 32', 34', 36', 38' bei Beleuchten des Objekts 12 mit Beleuchtungslicht 54 erfasst werden, das in Bezug auf einen Objektabbildungsstrahlengang 32, 34, 36, 38 wenigstens teilweise das Objekt 12 beleuchtendes Auflicht ist, wobei die zweiten Bilddaten aus unterschiedlichen Aufnahmerichtungen 30', 32', 34', 36', 38' bei Beleuchten des Objekts 12 mit Beleuchtungslicht 54 erfasst werden, das wenigstens teilweise in einem Objektabbildungsstrahlengang 32, 34, 36, 38 geführt ist, und wobei die 3D-Rekonstruktion 62 des Objekts 12 aus den ersten Bilddaten und den zweiten Bilddaten berechnet wird.

**Bezugszeichenliste**

| | |
|---|---|
| 1 | Epipolarebenenbild $E_{x,k}(y,t)$ |
| $2^{(1)}$, $2^{(2)}$, ... $2^{(n-1)}$, $2^{(n)}$ | zu verschiedenen Zeiten t erfasste Bilder |
| $4^{(2)}$, ... $4^{(n)}$ | Epipolarlinie |
| 5 | 3D-Punkt |
| 6 | Gerade |
| 10 | Vorrichtung |
| 12 | Objekt |
| 14 | Haltearm |
| 15 | Objektträger |
| 16 | Säule |
| 18 | Ebene |
| 19 | Doppelpfeil |
| 20, 22, 24, 26, 28 | Bilderfassungseinrichtung |
| 30, 32, 34, 36, 38 | Objektabbildungsstrahlengang |
| 30', 32', 34', 36', 38' | Aufnahmerichtung |
| 40 | Koordinatensystem |
| 42, 44, 46, 48, 50 | Lichtquelle |
| 52 | Leuchtkörper |
| 54 | diffuses Beleuchtungslicht |
| 56 | Spiegel |
| 57 | Objektseite |
| 58 | Rechnereinheit |
| 60 | Display |
| 62 | 3D-Rekonstruktion |
| 64 | erste Bilder |
| 66 | zweite Bilder |
| 68 | Objektmerkmalsbilder |
| 70 | Kanteninformationsbilder |
| 72 | Rechenschritt |
| 74, 76, 78 | Bildmaske |
| 80, 82, 84 | Gewichtungsfunktion |
| 86 | Rechenschritt |
| 88 | nächster Schritt |
| 90 | weiterer Schritt |
| 92 | Berechnungsroutine |
| 94, 96, 98 | Rechenroutine |
| 100, 100' | Algorithmus |
| 102 | Speicherroutine |
| 104 | Anzeigeroutine |
| 106 | erste Bilder |
| 108 | zweite Bilder |
| 110 | Entzeichnungsschritt |
| 111 | Rechenschritt |
| 112 | Entzeichnungsschritt |
| 114 | Objektmerkmalsbilder |
| 116 | Kanteninformationsbilder |
| 118, 120, 122, 124 | Bildmaske |

| 126, 128 | Epipolarebenenbilder |
|---|---|
| 130 | Gewichtungsfunktion |
| 132 | Objektpunkttrajektorien |
| 134 | Objektpunkttrajektorien |
| 136, 138 | Punktewolke |
| 140 | Mesh |
| 142 | Rückprojektion |
| 144 | Schritt |
| 146 | Berechnungsroutine |
| 148, 150, 152 | Rechenroutine |
| 154 | Speicherroutine |
| 156 | Anzeigenroutine |

**Patentansprüche**

1. Verfahren zum Erzeugen einer 3D-Rekonstruktion (62) eines Objekts (12) umfassend
das Beleuchten des Objekts (12);
das Erfassen von Bilddaten zu dem Objekt (12); und
das Berechnen der 3D-Rekonstruktion (62) des Objekts (12) aus den Bilddaten;
**dadurch gekennzeichnet, dass**
die Bilddaten erste Bilddaten und zweite Bilddaten umfassen,
wobei die ersten Bilddaten aus unterschiedlichen Aufnahmerichtungen (30'. 32', 34', 36', 38') bei Beleuchten des Objekts (12) mit Beleuchtungslicht (54) erfasst werden, das in Bezug auf einen Objektabbildungsstrahlengang (32, 34, 36, 38) wenigstens teilweise das Objekt (12) beleuchtendes Auflicht ist,
wobei die zweiten Bilddaten aus unterschiedlichen Aufnahmerichtungen (30', 32', 34', 36', 38') bei Beleuchten des Objekts (12) mit Beleuchtungslicht (54) erfasst werden, das wenigstens teilweise in einem Objektabbildungsstrahlengang (32, 34, 36, 38) geführt ist; und
die 3D-Rekonstruktion (62) des Objekts (12) aus den ersten Bilddaten und den zweiten Bilddaten berechnet wird.

2. Verfahren nach Anspruch 1, **dadurch gekennzeichnet, dass** für das Berechnen der 3D-Rekonstruktion (62) des Objekts (12) eine tomografische Rekonstruktion des Objekts (12) ermittelt wird, in dem die ersten und zweiten Bilddaten nach einem ortsabhängigen Gewichten in ein 3D-Voxel-Gitter rückprojiziert werden.

3. Verfahren nach Anspruch 1, **dadurch gekennzeichnet, dass** das Berechnen der 3D-Rekonstruktion (62) des Objekts (12) das Berechnen von Objektmerkmalsbildern (68, 114) zu wenigstens einem Teil der ersten Bilddaten umfasst.

4. Verfahren nach Anspruch 3, **dadurch gekennzeichnet, dass** die Objektmerkmalsbilder (68, 114) als Merkmal ein einzelnes Objektmerkmal oder mehrere Objektmerkmale aus der Gruppe Kante, Eckpunkte, Gaborfeature aufweisen, und/oder dass die Objektmerkmalsbilder (68) mittels maschinellen Lernens oder mittels eines neuronalen Netzes berechnet werden und/oder das Berechnen der 3D-Rekonstruktion (62) des Objekts (12) das Bestimmen segmentierter Bildmasken (74, 76, 78; 120, 122, 124) und das Ausschneiden eines Objektteils aus wenigstens einem Teil der ersten Bilddaten und/oder zweiten Bilddaten mittels segmentierter Bildmasken (74, 76, 78; 120, 122, 124) umfasst.

5. Verfahren nach Anspruch 3 oder 4, **dadurch gekennzeichnet, dass** das Berechnen der 3D-Rekonstruktion (62) des Objekts (12) das Berechnen von Kanteninformationsbildern (70, 116) aus den ersten Bilddaten und/oder zweiten Bilddaten umfasst.

6. Verfahren nach Anspruch 5 **dadurch gekennzeichnet, dass** das Berechnen der 3D-Rekonstruktion (62) des Objekts (12) das Berechnen von Epipolarebenenbildern (126, 128) aus den Objektmerkmalsbildern (114) und/oder den Kanteninformationsbildern (116) umfasst.

7. Verfahren nach Anspruch 6, **dadurch gekennzeichnet, dass** das Berechnen der 3D-Rekonstruktion (62) des Objekts (12) das Berechnen von Objektpunkttrajektorien (132, 134) aus den Epipolarebenenbildern (126, 128) und das Vermessen der Steigung der berechneten Objektpunkttrajektorien (132, 134) und das Schätzen von Tiefeninformationen mittels Triangulation zu einer epipolargeometrischen 3D-Rekonstruktion (62) des Objekts (12) umfasst.

8. Verfahren nach Anspruch 7, **dadurch gekennzeichnet, dass** für das Berechnen der 3D-Rekonstruktion (62) des Objekts (12) eine tomografische Rekonstruktion des Objekts (12) ermittelt wird, in dem die ersten Bilddaten und die zweiten Bilddaten nach einem ortsabhängigen Gewichten in ein 3D-Voxel-Gitter rückprojiziert werden, wobei die epipolargeometrische 3D-Rekonstruktion (62) des Objekts (12) mit dem 3D-Voxel-Gitter zu der 3D-Rekonstruktion des Objekts (12) verrechnet wird.

9. Verfahren nach Anspruch 7 oder 8, **dadurch gekennzeichnet, dass** aus dem 3D-Voxel-Gitter ein Mesh (140) für die Beschreibung der Oberfläche des Objekts (12) berechnet wird; und/oder **dadurch gekennzeichnet, dass** aus dem 3D-Voxel-Gitter über Ableitungsfilter Meshnormalen berechnet werden.

10. Verfahren nach einem der Ansprüche 1 bis 9, **dadurch gekennzeichnet, dass** mindestens ein Schritt aus der folgenden Gruppe von Schritten durchgeführt wird:

    Berechnen einer Texturtransparenz aus den zweiten Bilddaten, wobei die 3D-Rekonstruktion (62) des Objekts (12) die Information der berechneten Texturtransparenz enthält;
    Berechnen eines spekularen Texturbildes, wobei die 3D-Rekonstruktion (62) des Objekts (12) die Information des berechneten Texturbilds enthält;
    Erfassen von Farbbildern als Bilder mit Bilddaten;
    Bestimmen der 3D-Rekonstruktion (62) des Objekts (12) durch Verrechnen von mehreren 3D-Farbkanalrekonstruktionen des Objekts (12), wobei jede der 3D-Farbkanalrekonstruktionen aus den ersten Bilddaten und den zweiten Bilddaten für einen Farbkanal und/oder für einen Texturtransparenzkanal berechnet wird;
    Bestimmmen einer Texturinformationen aufweisenden 3D-Rekonstruktion (62);
    Spiegeln einer Ansicht des Objekts (12) in die Bilderfassungseinrichtung (20, 22, 24, 26, 28).

11. Verfahren nach einem der Ansprüche 1 bis 10, **dadurch gekennzeichnet, dass** das Berechnen der 3D-Rekonstruktion (62) des Objekts (12) das Berechnen einer visuellen Hülle von aus den zweiten Bilddaten berechneten Silhouetten des Objekts (12) umfasst.

12. Visualisieren eines in einem Verfahren nach einem der Ansprüche 1 bis 11 erzeugten 3D-Rekonstruktion (62) eines Objekts (12) mit einem Mesh (140).

13. Vorrichtung zum Erzeugen einer 3D-Rekonstruktion (62) eines Objekts (12)
    mit einer Einrichtung für das Beleuchten des Objekts (12) mit Beleuchtungslicht (54);
    mit einer Einrichtung für das Erfassen einer Vielzahl von Bildern des Objekts (12) mit Bilddaten in einem jeweiligen Objektabbildungsstrahlengang (32, 34, 36, 38);
    mit einer Einrichtung für das Berechnen der 3D-Rekonstruktion (62) des Objekts (12) aus den erfassten Bildern; und
    mit Mitteln, die geeignet sind, die Schritte eines in den Ansprüchen 1 bis 12 angegebenen Verfahrens auszuführen.

14. Computerprogramm, umfassend Befehle, die bewirken, dass die Vorrichtung des Anspruchs 13 die in einem der Ansprüche 1 bis 12 angegebenen Verfahrensschritte ausführt.

15. Vorrichtung zum Erzeugen einer 3D-Rekonstruktion (62) eines Objekts (12)
    mit einer Einrichtung für das Beleuchten des Objekts (12) mit Beleuchtungslicht (54);
    mit einer Einrichtung für das Erfassen von Bilddaten zu dem Objekt; und
    mit einer Einrichtung für das Berechnen der 3D-Rekonstruktion (62) des Objekts (12) aus den erfassten Bilddaten;
    **dadurch gekennzeichnet, dass**
    die erfassten Bilddaten erste Bilddaten und zweite Bilddaten enthalten,
    wobei die ersten Bilddaten aus unterschiedlichen Aufnahmerichtungen (30'. 32', 34', 36', 38') bei Beleuchten des Objekts (12) mit Beleuchtungslicht (54) erfasst sind, das in Bezug auf einen Objektabbildungsstrahlengang (32, 34, 36, 38) wenigstens teilweise das Objekt (12) beleuchtendes Auflicht ist,
    wobei die zweiten Bilddaten aus unterschiedlichen Aufnahmerichtungen (30'. 32', 34', 36', 38') bei Beleuchten des Objekts (12) mit Beleuchtungslicht (54) erfasst sind, das wenigstens teilweise in einem Objektabbildungsstrahlengang (32, 34, 36, 38) geführt ist; und
    die 3D-Rekonstruktion (62) des Objekts (12) aus den ersten Bilddaten und den zweiten Bilddaten berechnet ist.

Fig.1

Fig.2

Fig.3

100

| 64 | Erste Bilder unter Auflichtbeleuchtung | | Zweite Bilder unter Durchlichtbeleuchtung | 66 |

68 — Berechnung von Objekt-merkmals-bildern

70 — Berechnung von Kanten-informations-bildern

72 — Berechnung von Bildmasken (Segmentierung)

74 — Maskierung der Bilder

76 — Maskierung der Bilder

78 — Maskierung der Bilder

80 — Filterung, Ortsabhängige Gewichtung

82 — Filterung, Ortsabhängige Gewichtung

84 — Filterung, Ortsabhängige Gewichtung

86 — Rückprojektion in ein 3D Voxelgitter

88 — Artefaktkorrektur des 3D Voxelgitters

90 — Oberflächenrekonstruktion, Ergebnis ist ein Mesh

92 — Berechnung Normalenvektoren für Mesh-Knoten

Texturberechnung

Berechnung spekulares Texturbild

Textur-Transparenzberechnung

94

96

98

62 — Ergebnis ist eine 3D-Rekonstruktion inkl. Voxelgitter, 3D-Mesh mit Normalenvektoren an den Knotenpunkten, Texturbild inkl. Textur-Transparenz und spekularem Texturbild

102 — Abspeichern der 3D-Rekonstruktion

Darstellen der 3D-Rekonstruktion — 104

Fig.4

100'

| 106 — | Erste Bilder unter Auflichtbeleuchtung | | Zweite Bilder unter Durchlichtbeleuchtung | —108 |

| 110 — | Bildentzeichnung | | Bildentzeichnung | —112 |

116

| 114 — | Berechnung von Objekt-merkmals-bildern | Berechnung von Kanten-informations-bildern | | Berechnung von Bildmasken (Segmentierung) | —111 |

| 120 — | Maskierung der Bilder | Maskierung der Bilder —122 | | Maskierung der Bilder | —124 |

| 126 — | Berechnung EEB | Berechnung EEB —128 | | Filterung, Ortsabhängige Gewichtung | —130 |

| 132 — | Dedektion von Objektpunkt-trajektorien | Dedektion von Objektpunkt-trajektorien —134 | | Rückprojektion in ein 3D Voxelgitter | —142 |

| 136 — | Berechnung Punktewolke | Berechnung Punktewolke —138 | | Artefaktkorrektur des 3D Voxelgitters | —144 |

| 140 — | Oberflächenrekonstruktion, Ergebnis ist ein Mesh | | Berechnung Normalenvektoren für Mesh-Knoten | —146 |

| Texturberechnung | Berechnung spekulares Texturbild | Textur-Transparenzberechnung |

148    150    152

| 62 — | Ergebnis ist eine 3D-Rekonstruktion inkl. Voxelgitter, 3D-Mesh mit Normalenvektoren an den Knotenpunkten, Texturbild inkl. Textur-Transparenz und spekularem Texturbild |

| 154 — | Abspeichern der 3D-Rekonstruktion | | Darstellen der 3D-Rekonstruktion | —156 |

Fig.5

Europäisches
Patentamt

European
Patent Office

Office européen
des brevets

# EUROPÄISCHER RECHERCHENBERICHT

**Nummer der Anmeldung**

EP 18 21 4974

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ZHEN LIU ET AL: "A Novel Stereo Vision Measurement System Using Both Line Scan Camera and Frame Camera", IEEE TRANSACTIONS ON INSTRUMENTATION AND MEASUREMENT., 12. Dezember 2018 (2018-12-12), Seiten 1-13, XP055589653, US ISSN: 0018-9456, DOI: 10.1109/TIM.2018.2880080 | 1,12-15 | INV. G06T11/00 |
| A | * das ganze Dokument * | 2-11 | |
| | ----- | | |
| A | DE 10 2018 105709 A1 (WERTH MESSTECHNIK GMBH [DE]) 20. September 2018 (2018-09-20) * Abbildung 5 * * Absatz [0075] * | 1-15 | |
| | ----- | | |

**RECHERCHIERTE SACHGEBIETE (IPC)**

G06T

Der vorliegende Recherchenbericht wurde für alle Patentansprüche erstellt

| Recherchenort | Abschlußdatum der Recherche | Prüfer |
|---|---|---|
| München | 17. Mai 2019 | Werling, Alexander |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 21 4974

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-05-2019

| Im Recherchenbericht angeführtes Patentdokument | Datum der Veröffentlichung | Mitglied(er) der Patentfamilie | Datum der Veröffentlichung |
|---|---|---|---|
| DE 102018105709 A1 | 20-09-2018 | KEINE | |

Für nähere Einzelheiten zu diesem Anhang : siehe Amtsblatt des Europäischen Patentamts, Nr.12/82

EPO FORM P0461

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9357204 B2
- DE 102018209570
- US 2015362761 A

**In der Beschreibung aufgeführte Nicht-Patentliteratur**

- **R. CIERNIAK.** X-ray computed tomography in biomedical engineering. Springer Science, 2011
- **D.G. LOWE.** Object recognition from local scale invariant features. *Proceedings of the International Conference on Computer Vision, ICCV,* 1999, vol. 99, 1150-1157
- **H. BAY ; A. ESS ; T. TUYTELAARS ; L. VAN GOOL.** Speeded-Up Robust Features (surf). *Comput. Vis. Image Underst.,* 2008, vol. 110 (3), 346-359
- Fast explicit diffusion for accelerated features in nonlinear scale spaces. **A. B. PABLO ALCANTARILLA ; J. NUEVO.** Proceedings of the British Machine Vision Conference. BMVA Press, 2013
- **MATAS ; O. CHUM ; M. URBAN ; T. PAJDLA.** Robust Wide Baseline Stereo from Maximally Stable Extremal Regions. *Proc. BMVC,* 2002, 36.1-36.10
- **W. RONG ; Z. LI ; W. ZHANG ; L. SUN.** An Improved Canny Edge Detection Algorithm. *IEEE International Conference on Mechatronics and Automation,* 2014, 577-582
- **R.C. BOLLES ; H.H. BAKER ; D.H. MARIMONT.** Epipolar-Plane Image Analysis: An Approach to Determining Structure from Motion. *International Journal of Computer Vision,* 1987, vol. 1, 7-55
- **R.O. DUDA ; P.E. HART.** Use of the Hough Transformation to Detect Lines and Curves in Pictures. *Comm. ACM,* 1972, vol. 15, 11-15
- Globally Consistent Depth Labeling of 4D Light Fields, Computer Vision and Pattern Recognition (CVPR). **S. WANNER ; B. GOLDLUCKE.** IEEE Conference on. IEEE, 2012
- **R. HARTLEY ; A. ZISSERMAN.** Multiple View Geometry in Computer Vision. Cambridge University Press, 2003
- Convex super-resolution detection of lines in images. **K. POLISANO et al.** Signal Processing Conference (EUSIPCO). IEEE, 2016
- Depth from Combining Defocus and Correspondence Using Light-Field Cameras. **M.W. TAO ; S. HADAP ; J. MALIK ; R. RAMAMOORTHI.** Proceedings of the 2013 IEEE International Conference on Computer Vision (ICCV '13). IEEE Computer Society, 2013, 673-680
- **R. HARTLEY ; A. ZISSERMAN.** Multiple View Geometry in Computer Vision. Cambridge University Press, 2004
- Clustering for Surface Reconstruction, 1st International Workshop towards Semantic Virtual Environments, Villars, Switzerland. **F. ISGRO ; F. ODONE ; W. SALEEM ; O. SCHAL.** MIRALab. 2005, 156-162
- **F. ZHOU ; Y. ZHAO ; K.-LIU MA.** Parallel mean shift for interactive volume segmentation, Machine learning in medical imaging. *Lecture notes in Computer science,* 2010, 67-75
- Poisson surface reconstruction. **M. KAZHDAN ; M. BOLITHO ; H. HOPPE.** Proceedings of the fourth Eurographics symposium on Geometry processing (SGP '06). Eurographics Association, 2006, 61-70
- **M. KAZHDAN ; MICHAEL ; BOLITHO ; MATTHEW ; HOPPE ; HUGUES.** Screened Poisson Surface Reconstruction. *ACM Transactions on Graphics,* 2006, vol. 32, 61-70
- **A. BAUMBERG.** Blending Images for Texturing 3D Models. *BMVC,* 2002
- **Y. SHUNTARO et al.** The Theory and Practice of Coplanar Shadowgram Imaging for Acquiring Visual Hulls of Intricate Objects. *International Journal of Computer Vision,* 2008, vol. 81, 259-280
- **G. HARO.** Shape from silhouette consensus and photo-consistency. *IEEE International Conference on Image Processing (ICIP),* 2014, 4837-4841
- **B. JÄHNE.** Digitale Bildverarbeitung. Springer Verlag, 1997
- Level Set Methods and Fast Marching Methods Evolving Interfaces in Computational Geometry. **J.A. SETHIAN.** Fluid Mechanics, Computer Vision, and Materials Science. Cambridge University Press, 1999

- **M. SEZGIN ; B. SANKUR.** Survey over image thresholding techniques and quantitative performance evaluation. *Journal of Electronic Imaging,* 2004, vol. 13 (1), 146-165